# EUROPÄISCHE PATENTSCHRIFT

(11) **EP 1 192 197 B1**
(45) Veröffentlichungstag und Bekanntmachung des Hinweises auf die Patenterteilung: **04.12.2002**
(21) Anmeldenummer: 00938772.1
(22) Anmeldetag: 07.06.2000
(51) Int. Cl.: C08F 255/02, C08F 210/02

(54) **VERFAHREN ZUR HERSTELLUNG VON PFROPFCOPOLYMEREN MIT EINEM ELASTISCHEN PFROPFCOPOLYMERRÜCKGRAT**
METHOD FOR PRODUCING GRAFT COPOLYMERS, CONTAINING AN ELASTIC GRAFT COPOLYMER BACKBONE
PROCEDE DE PRODUCTION DE COPOLYMERES GREFFES COMPORTANT UN SQUELETTE DE COPOLYMERE GREFFE ELASTIQUE

(30) Priorität: 16.06.1999 DE 19927347
(43) Veröffentlichungstag der Anmeldung: 03.04.2002
(73) Patentinhaber: BASF AKTIENGESELLSCHAFT, 67056 Ludwigshafen (DE)
(72) Erfinder: MÜLHAUPT, Rolf, D-79117 Freiburg (DE); HEINEMANN, Johannes, D-79098 Freiburg (DE); BAUMERT, Martin, D-79102 Freiburg (DE); QUEISSER, Joachim, D-68165 Mannheim (DE); GEPRÄGS, Michael, D-67245 Lambsheim (DE)
(86) Internationale Anmeldenummer: EP0005260
(87) Internationale Veröffentlichungsnummer: WO00077060

(56) Entgegenhaltungen:
- EP-A- 0 135 280
- DE-A- 19 812 124
- UDO M. STEHLING ET AL.: "Synthesis of Poly(olefin) Graft Copolymers by a Combination of Metallocene and "Living" Free Radical Polymerization Techniques" MACROMOLECULES, Bd. 31, Nr. 13, 1998, Seiten 4396-4398, XP000765447 in der Anmeldung erwähnt

## Beschreibung

Die vorliegende Erfindung betrifft Verfahren zur Herstellung von Pfropfcopolymeren mit einem elastischen Pfropfcopolymerrückgrat. Des weiteren betrifft die Erfindung die nach den Verfahren erhältlichen Pfropfcopolymeren sowie deren Verwendung als zähmodifizerte Thermoplasten und als Phasenvermittler in Polymerblends.

Pfropfcopolymere sowie Verfahren zu deren Herstellung sind dem Fachmann bekannt. Bei dieser Verbindungsklasse sind mehrere (Co)polymerketten kovalent mit einem Pfropfcopolymerrückgrat verknüpft. Ghosh et al., Polymer 1998, Vol. 39, S. 193 bis 201, beschreiben beispielsweise den radikalischen Aufbau von Pfropfästen aus Acrylsäure, Ethylacrylat und Butylacrylat an einem Polymerrückgrat aus Polyethylen mit einer niedrigen Dichte (sogenanntes LD-PE). Diese Darstellungsmethode ist jedoch nicht sehr selektiv und führt in nicht unerheblichem Umfang zur Bildung von Homopolymeren. Überdies wurde unter den offenbarten Reaktionsbedingungen Gelbildung aufgrund von Quervernetzungsreaktionen des Polyethylens beobachtet. Dieses macht einen separaten Auftrennungsschritt zur Isolierung eines definierten Pfropfcopolymeren unumgänglich und führt zu größeren Mengen an nicht weiter verwertbaren Nebenprodukten.

Polystyrolseitenketten können gemäß Sun et al., Polymer 1998, Vol. 39, S. 2201 bis 2208, auf Polyethylen mit niedriger Dichte unter den Bedingungen der Friedel-Crafts-Alkylierung mittels Schmelzextrusion aufgepfropft werden. Hierbei läßt sich allerdings nicht vermeiden, daß es zu erheblichen Abbaureaktionen beim Polyethylen und insbesondere beim Polystyrol kommt, so daß ein einheitliches Pfropfcopolymer, wenn überhaupt, nur nach aufwendigen Trennoperationen erhältlich ist. Neben Polystyrol und LD-PE liegt im Reaktionsgemisch ein uneinheitliches Pfropfcopolymerisat vor.

F. Köller (und M. Arnold), Doktorarbeit, 1999, Martin-Luther-Universität Halle-Wittenberg, gelangen metallocenkatalysiert zu mit Polystyrolseitenästen gepfropftem Polypropylen, das als Verträglichkeitsvermittler für Polypropylen/Polystyrol-Blends in Frage kommt. Allerdings sind die verwendeten, mit einer α-Norbomenylgruppe terminierten Polystyrolketten, die mit Propen copolymerisiert werden, nur unter den Bedingungen der anionischen Polymerisation zugänglich. Dieses Verfahren stellt hohe Anforderungen an die Reinheit der eingesetzten Komponenten und ist zudem unter Ausschluß von Sauerstoff und Feuchtigkeit zu führen. Der damit einhergehende präparative Aufwand schließt in der Regel großtechnische Anwendungen von vornherein aus. Außerdem kommen für die Herstellung der Seitenäste nur solche Momomere in Betracht, die über Funktionalitäten verfügen, welche unter den Bedingungen der anionischen Polymerisation stabil sind.

Nach einer Vorschrift von Maldonado-Textle et al., Macromolecules, 1998, Vol. 31, S. 2696 bis 2698, lassen sich Polystyrolseitenäste kontrolliert radikalisch auf Polybutadiene aufpfropfen, wenn als Radikalinitiator ein Diphenyl(trimethoxysilyl)methylradikal eingesetzt wird. Allerdings konnte Gelbildung, d.h. Quervernetzungsreaktionen im Polymerrückgrat nicht unterdrückt werden.

Des weiteren ist es möglich, Pfropfcopolymere auf der Basis von Polypropylen mit Polystyrolseitenketten zu erhalten, indem man metallocenkatalysierte sowie kontrolliert radikalische Polymerisationstechniken kombiniert. So copolymerisierten Stehling et al., Macromolecules, 1998, Vol. 31, S. 4396 bis 4398, ein mit einem Alkoxyamin substituiertes α-Olefin mit Propen in Gegenwart eines Zirconocen-Katalysators. Unter Ausnutzung der labilen Sauerstoff/Kohlenstoff-Bindung der Alkoxyamineinheit, aus der thermisch mittels Homolyse ein Nitroxyl- und ein C-Radikal freigesetzt werden, konnte anschließend Styrol radikalisch anpolymerisiert werden.

Malmström und Hawker, Macromol. Chem. Phys., 1998, Vol. 199, S. 923 bis 935, nutzten die chemische Inertheit von Alkoxyaminen, um ein mit diesem Rest substituiertes Styrolderivat unter den Standardbedingungen der radikalischen Polymerisation (AIBN, 60°C) mit Styrol zu copolymerisieren. Anschließend wurde die Alkoxyamin-Einheit für den kontrolliert radikalischen Aufbau von Pfropfästen verwendet. In ähnlicher Weise können gemäß EP-A 0 135 280 Methacrylsäureester mit einer Alkoxyaminfunktionalität in der Estereinheit radikalisch mit Styrol oder Methyl(meth)acrylat zu den entsprechenden Pfropfcopolymerrückgraten copolymerisiert werden, an die sich dann kontrolliert radikalisch Polystyrol-, Polymethylacrylat bzw. Polyethylacrylatseitenäste anknüpfen lassen.

Die aufgezeigten Pfropfcopolymersynthesen ermöglichen allerdings keinen direkten und einfachen Zugang zu wohldefinierten Systemen mit thermoplastisch elastomerem Eigenschaftsprofil, wie es zum Beispiel Polymerstrukturen (Block- und Sterncopolymere) bestehend aus Styrol und Butadien besitzen. Letztgenannte Copolymere haben unter den Blockcopolymeren einen sehr großen industriellen Nutzen und werden zum Beispiel unter den Handelsnamen Kraton® (SHELL), Styroflex® (BASF) und Styrodur® (BASF) vertrieben. Die Synthese dieser Polymerstrukturen erfolgt bislang über einen vor allem für großtechnische Anwendungen relativ aufwendigen anionischen Mechanismus (s.a. K. Knoll, N. Nießner in Macromol. Symp., 1998, Vol. 132, S. 231 bis 243).

Ein alternativer Zugang stammt von Kobatake et al., Macromolecules, 1999, Vol. 32, S. 10. Mit einem Alkoxyaminrest terminiertes Polybutadien wurde zunächst mittels anionischer Polymerisation synthetisiert, woran man kontrolliert radikalisch Polystyrol anknüpfte, ohne dabei gleichzeitig die Doppelbindungen des Polybutadiengerüstes anzugreifen. Nachteilig an dieser Vorgehensweise ist, daß auch hier nicht vollständig auf ein anionisches Verfahren verzichtet werden kann. Außerdem liegen im erhaltenen thermoplastisch elastomeren Blockcopolymer Doppelbindungen vor, die ebenso wie bei den vorgenannten Standardprodukten das Einsatzspektrum dieser Materialien von vornherein merklich einschränken.

Es fehlt demnach bislang noch an Verfahren, mit denen thermoplastisch elastomere Pfropfcopolymere mit einheitlicher Zusammensetzung und nebenproduktfrei erhalten werden können, wobei diese Pfropfcopolymere uneingeschränkt für Anwendungen sowohl im Innenwie auch im Außenbereich in Frage kommen. Gleichzeitig wäre es wünschenswert, thermoplastische Pfropfcopolymere, die den genannten Anforderungen genügen, auf präparativ einfache Art und Weise aus unproblematisch verfügbaren Monomeren herstellen zu können, so daß auch eine Übertragung auf großtechnische Reaktionsbedingungen ohne weiteres möglich ist.

Der vorliegenden Erfindung lag daher die Aufgabe zugrunde, ein Verfahren zur Herstellung von Pfropfcopolymeren zur Verfügung zu stellen, mit dem auf präparativ einfache Weise ein Pfropfcopolymerrückgrat mit elastischen Eigenschaften erhalten wird, an das Pfropfäste mit thermoplastischem Eigenschaftsprofil angeknüpft werden können, ohne daß Neben- bzw. Abbaureaktionen auftreten.

Demgemäß wurde ein Verfahren zur Herstellung von Pfropfcopolymeren gefunden, bei dem man in einem ersten Schritt
a) Ethen als Hauptmonomer und als weiteres Comonomer ein mit einer Alkoxyamingruppe substituiertes α-Olefin (I) der allgemeinen Formel 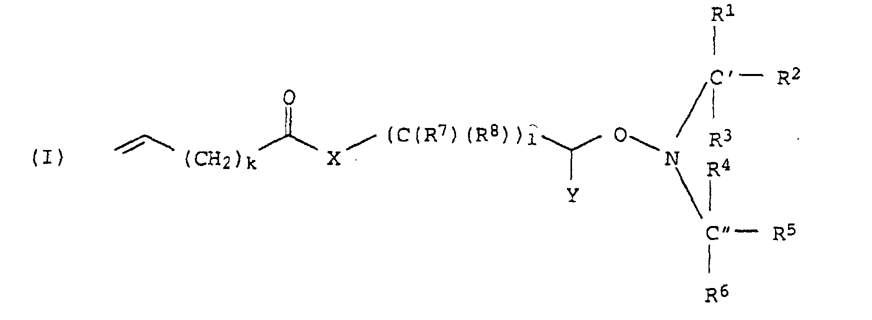 in der die Substituenten und Indizes die folgende Bedeutung haben:
   - X: C(R⁷)(R⁸), O, N(R⁹) oder S mit
   - R⁷,R⁸,R⁹: Wasserstoff, C₁- bis C₁₀-Alkyl, C₆- bis C₁₆-Aryl oder Alkylaryl mit 1 bis 10 C-Atomen im Alkyl- und 6 bis 14 C-Atomen im Arylteil,
   - Y: C₆- bis C₁₆-Aryl, CN, C(O)OR⁹ oder NO₂,
   - R¹,R²,R⁵,R⁶: unabhängig voneinander Wasserstoff, C₁-bis C₁₀-Alkyl, C₆- bis C₁₆-Aryl, Alkylaryl mit 1 bis 10 C-Atomen im Alkyl- und 6 bis 14 C-Atomen im Arylteil, CN oder C(O)OR⁹,
   - R³ und R⁴: C₁-bis C₁₀-Alkyl, C₆- bis C₁₆-Aryl oder Alkylaryl mit 1 bis 10 C-Atomen im Alkyl- und 6 bis 14 C-Atomen im Arylteil oder R³ und R⁴ bilden gemeinsam mit -C'-N-C''- einen fünf- oder sechsgliedrigen Stickstoffheterocyclus,
   - k: ganze Zahlen von 0 bis 20,
   - l: für X = C(R⁷)(R⁸): ganze Zahlen von 0 bis 20 und für X = O, N(R⁹) oder S: ganze Zahlen von 1 bis 20,
   in Gegenwart einer Übergangsmetallverbindung der allgemeinen Formel (II) 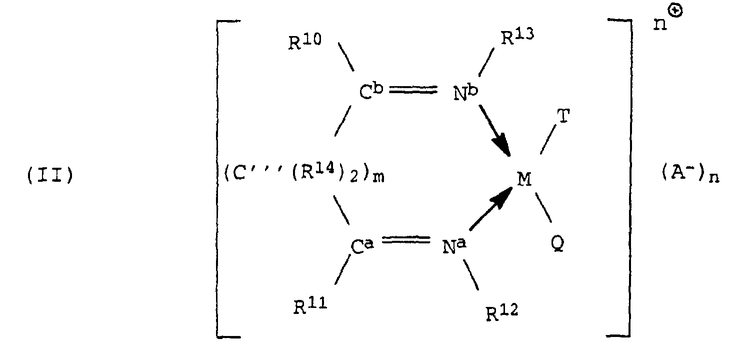 in der die Substituenten und Indizes die folgende Bedeutung haben:
   - R¹⁰, R¹¹: Wasserstoff, C₁- bis C₁₀-Alkyl, C₃- bis C₁₀-Cyclo-alkyl, C₆- bis C₁₆-Aryl, Alkylaryl mit 1 bis 10 C-Atomen im Alkyl- und 6 bis 14 C-Atomen im Arylteil oder Si(R¹⁵)₃, oder R¹⁰ und R¹¹ bilden gemeinsam mit C^{a}, C^{b} und gegebenenfalls C''' einen fünf-, sechs-oder siebengliedrigen aliphatischen oder aromatischen, substituierten oder unsubstituierten Carbo-oder Heterocyclus,
   - R¹² R¹³: C₆- bis C₁₆-Aryl,
   - R¹⁴: Wasserstoff, C₁- bis C₁₀-Alkyl, C₆- bis C₁₆-Aryl oder Alkylaryl mit 1 bis 10 C-Atomen im Alkyl- und 6 bis 14 C-Atomen im Arylteil,
   - R¹⁵: C₁- bis C₁₀-Alkyl, C₆- bis C₁₆-Aryl oder Alkylaryl mit 1 bis 10 C-Atomen im Alkyl- und 6 bis 14 C-Atomen im Arylteil,
   - m: 0 oder 1, bevorzugt 0,
   - M: ein Metall der Gruppe VIII B des Periodensystems der Elemente,
   - T, Q: neutrale oder monoanionische Liganden,
   - A: ein nicht oder schlecht koordinierendes Anion und
   - n: 0, 1, 2 oder 3,
   koordinativ zu einem elastomeren Pfropfcopolymerrückgrat copolymerisiert, in einem zweiten Schritt
b) unter kontrolliert radikalischen Polymerisationsbedingungen das nach a) erhaltene Copolymer in Gegenwart von Monomeren, ausgewählt aus der Gruppe bestehend aus vinylaromatischen Verbindungen, vinylheteroaromatischen oder vinylheteroalicyclischen Verbindungen, Alkylestern und -amiden der (Meth)acrylsäure, Acrylnitril, Methacrylnitril, Maleimid oder Vinylferrocen sowie gegebenenfalls zusätzlich in Gegenwart von konjugierten organischen Dienen unter Ausbildung von kovalent angeknüpften Pfropfästen reagieren läßt
   und in einem dritten Schritt
c) das nach b) erhaltene Pfropfcopolymere isoliert,
   oder in einem dritten Schritt
c') die die Pfropfcopolymerseitenäste terminierenden Alkoxyamingruppen unter reduktiven Reaktionsbedingungen entfernt und in einem vierten Schritt
d') das nach c') erhaltene Pfropfcopolymer isoliert.

Des weiteren wurden die nach den erfindungsgemäßen Verfahren erhältlichen Pfropfcopolymere sowie deren Verwendung als zähmodifizerte Thermoplasten und als Phasenvermittler in Polymerblends gefunden.

Bei den erfindungsgemäßen Verfahren kommt als Hauptmonomer in Schritt a) Ethen zum Einsatz. Hauptmonomer im Sinne der vorliegenden Erfindung ist eine Verbindung, wenn ihr Anteil in dem resultierenden Copolymer größer 50 mol-% ist. Ethen wird in das Copolymer nach Schritt a) regelmäßig in Mengen von 55 bis 99,999 mol-%, bevorzugt in Mengen von 70 bis 99,98 mol-% und besonders bevorzugt in Mengen von 70 bis 99,80 mol-% eingebaut.

Die weitere Copolymerkomponente nach Schritt a) stellt ein mit einer Alkoxyamingruppe substituiertes α-Olefin gemäß der zuvor genannten allgemeinen Formel (I) dar.

Die Comonomere (I) liegen in dem Copolymer nach Schritt a) in Mengen von 0,001 bis 45 mol-%, bevorzugt von 0,01 bis 15 mol-% und besonders bevorzugt von 0,05 bis 5 mol-%, bezogen auf sämtliche in das Copolymer nach Schritt a) eingebauten Monomereinheiten, vor.

X stellt im Comonomer (I) insbesondere Sauerstoff oder eine N(R⁹)-Gruppe dar. Geeignete Reste R⁹ - auch für den Rest C(O)OR⁹ in (I) - sind Methyl, Ethyl, n-Propyl, i-Propyl, n-Butyl, t-Butyl, Phenyl oder Benzyl. Besonders bevorzugt ist Sauerstoff als Einheit X.

Bei dem Rest Y handelt es sich insbesondere um eine C6- bis C₁₆-Aryleinheit, beispielsweise Phenyl oder Naphthyl, die auch am aromatischen System substituiert sein kann. Geeignete Substituenten sind beispielsweise C₁- bis C₆-Alkylgruppen wie Methyl, Ethyl, n- oder i-Propyl sowie n-, i- oder t-Butyl, halogensubstituiertes Alkyl wie Trifluormethyl, 2,2,2-Trifluorethyl oder Pentafluorethyl, Halogen wie Fluorid, Chlorid, Bromid oder Iodid, die Nitro- oder Cyanogruppe sowie Carbonsäure- und Carbonsäureesterreste, beispielsweise Methylbenzoat. Das aromatische System kann einfach, mehrfach oder persubstituiert sein. Bevorzugt ist eine Substitution in para- und/oder ortho-Position.

Des weiteren kann Y NO₂, C(O)OR⁹ oder CN bedeuten. Bevorzugt stellt Y eine Phenylgruppe oder eine in para-Position mit einem elektronenziehenden Rest wie Halogen, Trifluormethyl, Nitro oder Cyano substituierte Phenylgruppe dar.

Die Alkoxyamineinheit -O-N[C'(R¹)(R²)(R³)][C''(R⁴)(R⁵)(R⁶)] in dem Comonomer (I) zeichnet sich durch sterisch anspruchsvolle Substituenten vorzugsweise vicinal zum Alkoxyaminstickstoff aus. Grundsätzlich sind solche Alkoxyamineinheiten im Comonomer (I) bevorzugt, in denen das Stickstoffatom durch mindestens eine sterisch anspruchsvolle Gruppe abgeschirmt wird.

Geeignete Reste R¹ bis R⁶ sind unabhängig voneinander beispielsweise Methyl, Ethyl, n- oder i-Propyl, n-, i- oder t-Butyl, neoPentyl oder Benzyl. Daneben sind als solche Reste auch Carbonsäuregruppen sowie deren C₁- bis C₁₀-Alkyl- oder C₆- bis C₁₆-Arylester oder -amide möglich, also z.B. ein Acetat- oder ein Acetamidrest.

Darüber hinaus kommen Alkoxyamineinheiten in Frage, bei denen die Reste R³ und R⁴ zusammen mit der Einheit -C'-N-C''- einen fünfoder sechsgliedrigen Stickstoffheterocyclus ausbilden, in dem die Reste R¹, R², R⁵ und R⁶ die vorgenannten Bedeutungen haben. Weiterhin können auch die weiteren Ringkohlenstoffatome mit den vorgenannten Resten oder mit Hydroxy-, Säure-, Ester-, Amidgruppen oder beispielsweise Halogen substituiert sein. Schließlich können an den Stickstoffheterocyclus auch aliphatische oder aromatische Ringsysteme, die gegebenenfalls wiederum mit den vorgenannten Resten substituiert sein können, annelliert sein. Als bicyclische Alkoxyamineinheiten kommen beispielsweise die folgenden Verbindungen in Betracht: 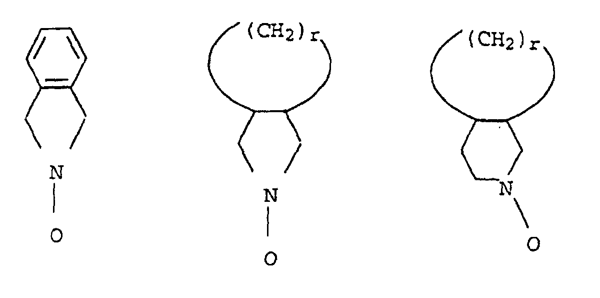 in denen r eine ganze Zahl von 1 bis 10, bevorzugt 1 bis 4 bedeutet.

Geeignete Alkoxyaminheiten mit heterocyclischem Ringsystem sind zum Beispiel 2,2,6,6-Tetramethyl-1-piperidinyloxy (TEMPO), 4-Oxo-2,2,6,6-tetramethyl-1-piperidinyloxy (4-Oxo-TEMPO), 4-Hydroxy-2,2,6,6-tetramethyl-1-piperidinyloxy, 2,2,5,5-Tetramethyl-1-pyrrolidinyloxy, 3-Carboxy-2,2,5,5-tetramethyl-pyrrolidinyloxy, 2,6-Di-n-propyl-2,6-dimethyl-1-piperidinyloxy, 2,6-Diphenyl-2,6-dimethyl-1-piperidinyloxy, 4-Hydroxy-2,2,6,6-tetramethyl-1-piperidinyloxy, 4-Hydroxy-2,6-di-n-propyl-2,6-dimethyl-1-piperidinyloxy,
4-Hydroxy-2,6-diphenyl-2,6-dimethyl-1-piperidinyloxy oder 2,5-Diphenyl-2,5-dimethyl-1-pyrrolidinyloxy. Unter den Verbindungen mit einem ankondensierten aromatischen Ring seien exemplarisch 1,1,3,3-Tetraethylisoindolin-2-yloxy und 1,1,3,3-Tetramethylisoindolin-2-yloxy genannt.

Die terminale Doppelbindung im Comonomer (I) kann sowohl unter Ausbildung eines α,β-ungesättigten Systems unmittelbar (k = 0), als auch über eine Alkylenkette mit der Carbonyl- bzw. Carboxygruppe in (I) verbunden sein. Die Länge der Alkylenkette kann in weiten Grenzen variieren und Wertigkeiten von beispielsweise k = 1 bis 20, bevorzugt von 1 bis 15 annehmen. An die terminale Doppelbindung bzw. die Alkylenkette schließt sich eine Keto-, eine Carbonsäureester oder eine Carbonsäureamideinheit an. Bevorzugt ist eine Carbonsäureestereinheit (X = O). An die genannten Carbonyl- bzw. Carboxyleinheiten knüpft sich eine unsubstituierte oder substituierte Alkyleneinheit [C(R⁷)(R⁸)]₁, in der 1 bevorzugt ganze Zahlen im Bereich von 1 bis 15 darstellt.

Die Comonomeren (I) können z.B. im Fall von X = O über eine Veresterungs- oder im Fall X = N(R⁹) über eine Amidbildungsreaktion aus einer Carbonsäure mit terminaler Doppelbindung, beispielsweise 10-Undecensäure, und einem geeigneten Alkohol bzw. einem Amin, enthaltend die Alkoxyamingruppe sowie den Rest Y, nach Standardmethoden hergestellt werden (s.a. Organikum, 1996, 20. Auflage). Die Synthese letztgenannter Komponenten, z.B. von 2,2,6,6-Tetramethyl-1-(2-benzoyloxy-1-phenylethoxy)piperidine findet sich bei Hawker et al., Macromolecules, 1996, Vol. 29, S. 5245 beschrieben und bedient sich allgemein zugänglicher Ausgangsstoffe.

Geeignete Comonomere (I) sind beispielsweise Undecensäure-2-phenyl-2-(2',2',6',6'-tetramethyl-1'-piperidinyloxy)ethylester, Acrylsäure-2-phenyl-2-(2',2',6',6'-tetramethyl-1'-piperidinyloxy)ethylester, Pentensäure-2-phenyl-2-(2',2',6',6'-tetramethyl-1'-piperidinyloxy)ethylester oder Heptensäure-2-phenyl-2-(2',2',5',5'-Tetramethyl-1-pyrrolidinyloxy)ethylester.

In einer weiteren, bevorzugten Ausführungsform wird in das Copolymer nach Schritt a) zusätzlich ein mit einer polaren Gruppe funktionalisiertes α-Olefin (Comonomer (III)) der allgemeinen Formel

CH₂=C(R¹⁶) (R¹⁷) (III),

eingebaut, in der die Substituenten und Indizes die folgende Bedeutung haben:
- R¹⁶: Wasserstoff, CN, CF₃, C₁- bis C₁₀-Alkyl, C₆- bis C₁₆-Aryl oder Alkylaryl mit 1 bis 10 C-Atomen im Alkyl- und 6 bis 14 C-Atomen im Arylteil, Pyrrolidonyl, Si(R²⁰)₃, Carbazolyl,
- R¹⁷: CN, C(O)R¹⁸, C(O)OR¹⁸, C(O)N(R¹⁸) (R¹⁹), O-C₁- bis -O-C₁₀-Alkyl, O-C₆- bis -O- C₁₆-Aryl mit
- R¹⁸, R¹⁹: Wasserstoff, C₁- bis C₁₀-Alkyl, C₂- bis C₁₀-Alkenyl, C₆-bis C₁₆-Aryl oder Alkylaryl mit 1 bis 10 C-Atomen im Alkyl- und 6 bis 14 C-Atomen im Arylteil, eine Epoxygruppe enthaltende C₂- bis C₁₀-Alkylgruppe, eine mit einer Epoxygruppe substituierte C₆- bis C₁₆-Arylgruppe oder Si(R²⁰)₃ und
- R²⁰: C₁- bis C₁₀-Alkyl, C₆- bis C₁₆-Aryl- oder Alkylaryl mit 1 bis 10 C-Atomen im Alkyl- und 6 bis 14 C-Atomen im Arylteil.

Funktionalisierte olefinisch ungesättigte Comonomere (III) verfügen über eine terminale Kohlenstoff/Kohlenstoff-Doppelbindung. Unter diesen Verbindungen sind (Meth)acrylsäure sowie die Esterund Amidderivate der (Meth)acrylsäure, vorzugsweise der Acrylsäure, sowie Acrylnitril oder Methacrylnitril besonders geeignet. Bevorzugt sind die C₁- bis C₁₀-, insbesondere die C₁- bis C₈-Alkylester der Acryl- und Methacrylsäure, also z.B. die Methyl-, Ethyl-, n-, i-Propyl-, n-, i-, t-Butyl-, Hexyl-, Dicyclopentadienyl-, 2-Ethylhexyl(meth)acrylat, wobei die Alkylreste linear oder verzweigt sein können. Weiterhin bevorzugt sind (Meth)acrylate mit einer Epoxygruppe in der Estereinheit, beispielsweise Glycidyl(meth)acrylate, sowie mit einer Alkenylgruppe wie Ethyliden oder Propyliden als Estereinheit. Acrylate sind besonders bevorzugt. Exemplarisch seien als besonders geeignet Methylacrylat, Ethylacrylat, n-Butylacrylat, tert-Butylacrylat, Dicyclopentadienylacrylat, Glycidylacrylat, 2-Ethylhexylacrylat sowie Acrylsäure genannt. Besonders bevorzugt sind Methylacrylat und Glycidylacrylat. Ebenso können Methacryl- oder Acrylnitril eingesetzt werden. Selbstverständlich können auch beliebige Mischungen an Comonomeren (III) eingesetzt werden. Die vorgenannten Monomere sind an sich bekannt und kommerziell erhältlich.

Die Comonomere (III) liegen im Copolymer nach Schritt a) in Mengen von 0 bis 25 mol-%, bevorzugt von 0,01 bis 15 mol-% und besonders bevorzugt von 0,05 bis 10 mol-%, bezogen auf sämtliche in das Copolymer nach Schritt a) eingebauten Monomereinheiten, vor. Bei dem erfindungsgemäßen Verfahren kann die Ausgangskonzentration der beschriebenen funktionalisierten Comonomere (III) über einen weiten Bereich variiert werden und beispielsweise ohne weiteres Werte im Bereich von 3 bis 6 mol/l annehmen.

In das Copolymer nach Schritt a) kann des weiteren als Comonomer (IV) ein unpolares Olefin, das nicht Ethen ist, eingebaut werden.

Als unpolare olefinisch ungesättigte Comonomere (IV) kommen Verbindungen der allgemeinen Formel

(R²¹)HC=C(R²²) (R²³) (IV)

in Frage, in der die Substituenten und Indizes die folgende Bedeutung haben:
- R²¹ bis R²³: unabhängig voneinander Wasserstoff, C₁- bis C₁₀-Alkyl, C₆- bis C₁₆-Aryl, Alkylaryl mit 1 bis 10 C-Atomen im Alkyl- und 1 bis 14 C-Atomen im Arylteil, Si(R²⁴)₃, wobei R²¹ bis R²³ nicht gleichzeitig Wasserstoff bedeuten, mit
- R²⁴: C₁- bis C₁₀-Alkyl, C₆- bis C₁₆-Aryl oder Alkylaryl mit 1 bis 10 C-Atomen im Alkyl- und 6 bis 14 C-Atomen im Arylteil.

Des weiteren stellt Tetrafluorethylen eine geeignete Verbindung (IV) dar. Außerdem können cyclische Olefine wie Cyclobuten, Cyclopenten, Cyclohexen oder Norbornen sowie substituierte Norbornene als Verbindungen (IV) eingesetzt werden. Bevorzugt sind unter diesen Cyclopenten und Norbornen. Bevorzugt werden als Comonomere (IV) Verbindungen mit einer endständigen Doppelbindung, beispielsweise Propen, 1-Buten, 1-Penten, 1-Hexen, 1-Hepten oder 1-Octen eingesetzt. Besonders bevorzugt sind Propen, 1-Buten und 1-Hexen.

Die Comonomere (IV) liegen im Copolymer nach Schritt a) in Mengen von 0 bis 15 mol-%, bevorzugt von 0 bis 10 mol-% und besonders bevorzugt von 0,1 bis 10 mol-%, bezogen auf sämtliche in das Copolymer nach Schritt a) eingebauten Monomereinheiten, vor.

Soweit nicht an anderer Stelle ausdrücklich beschrieben, weisen die Reste C₁- bis C₁₀-Alkyl, C₃- bis C₁₀-Cycloalkyl, C₆- bis C₁₆-Aryl und Alkylaryl im Sinne der vorliegenden Erfindung die folgende allgemeine und bevorzugte Bedeutung auf. Unter C₁- bis C₁₀-Alkylreste fallen zum Beispiel die Methyl-, Ethyl-, n- oder i-Propyl, n-, i- oder t-Butyl- sowie die Pentyl-, Hexyl- oder Heptylgruppe in geradkettiger und verzweigter Form. Unter C₁- bis C₁₀-Alkylreste fallen, abgesehen von Comonomer (IV), auch solche, die mit funktionellen Gruppen auf der Basis der Elemente der Gruppen IVA, VA, VIA oder VIIA des Periodensystems substituiert sind, also beispielsweise partiell oder perhalogenierte Alkylreste wie Trichlormethyl, Trifluormethyl, 2,2,2-Trifluorethyl, Pentafluorethyl oder Pentachlorethyl sowie eine oder mehrere Epoxygruppen tragende Alkylreste, beispielsweise Propenoxy. Im Sinne der vorliegenden Erfindung sind unter den C₁- bis C₁₀-Alkylresten regelmäßig die C₁- bis C₆-Alkylreste bevorzugt.

Unter geeignete C₃- bis C₁₀-Cycloalkylreste fallen Carbo- wie auch Heterocyclen, also beispielsweise substituiertes und unsubstituiertes Cyclopropyl, Cyclobutyl, Cyclopentyl, Cyclohexyl, Cyclooctyl, Pyrrolyl, Pyrrolidonyl oder Piperidinyl. Unter den substituierten cycloaliphatischen Resten seien exemplarisch 1-Methylcyclohexyl, 4-t-Butyl-cyclohexyl und 2,3-Dimethyl-cyclopropyl genannt.

Unter geeignete C₆- bis C₁₆-Arylgruppen fallen ganz allgemein substituierte und unsubstituierte Arylreste. Unter den unsubstituierten Arylresten sind die C₆- bis C₁₀-Arylgruppen wie Phenyl und Naphthyl bevorzugt. Phenyl ist besonders bevorzugt. Bei den unsubstituierten wie auch den substituierten C₆- bis C₁₆-Arylgruppen weist die Angabe der Kohlenstoffatome (z.B. C₆-, C₁₀- oder C₁₆-) auf die Anzahl der Kohlenstoffatome hin, die das aromatische System bilden. Kohlenstoffatome aus möglichen Alkyl- und/oder Arylsubstituenten sind mit dieser Angabe noch nicht erfaßt. Die Angabe C₆- bis C₁₆-Aryl soll somit beispielsweise auch substituierte C₆- bis C₁₆-Arylreste wie substituiertes Anthracenyl umfassen. Unter C₆- bis C₁₆-Arylreste fallen, abgesehen von Comonomer (IV), demgemäß auch solche Reste, die mit funktionellen Gruppen auf der Basis der Elemente aus den Gruppen IVA, VA, VIA und VIIA des Periodensystems der Elemente einfach, mehrfach oder persubstituiert sind. Geeignete funktionelle Gruppen sind C₁- bis C₁₀-Alkyl, bevorzugt C₁- bis C₆-Alkyl, C₆- bis C₁₆-Aryl, bevorzugt C₆- bis C₁₀-Aryl, Triorganosilyl wie Trimethyl-, Triethyl-, Triphenyl- oder t-Butyl-diphenylsilyl sowie Amino, beispielsweise NH₂, Dimethylamino, Di-i-propylamino, Di-n-butylamino, Diphenylamino oder Dibenzylamino, C₁- bis C₁₀-Alkoxy, bevorzugt C₁- bis C₆-Alkoxy, zum Beispiel Methoxy, Ethoxy, n- oder i-Propoxy, n-, i-oder t-Butoxy, oder Halogen wie Fluorid, Chlorid, Bromid oder Iodid.

Unter C₆- bis C₁₆-Arylreste im Sinne der Erfindung sind auch substituierte und unsubstituierte Heteroarylreste zu verstehen, beispielsweise C₄- bis C₁₃-Heteroaryl, bevorzugt C₄- bis C₉-Heteroaryl, wie Pyridyl, Pyrimidyl, Chinolyl oder Isochinolyl.

Unter geeignete Alkylarylreste fallen solche mit 1 bis 10, bevorzugt 1 bis 6 C-Atomen im Alkyl- und 6 bis 14, bevorzugt 6 bis 10 C-Atomen im Arylteil, insbesondere die Benzylgruppe.

Zur Herstellung des elastomeren Pfropfcopolymerrückgrats nach Schritt a) werden die beschriebenen Comonomeren - Ethen mit (I), Ethen mit (I) und (III), Ethen mit (I) und (IV) oder Ethen mit (I), (III) und (IV) - übergangsmetallkatalysiert in Gegenwart einer Komplexverbindung der allgemeinen Formel (II) 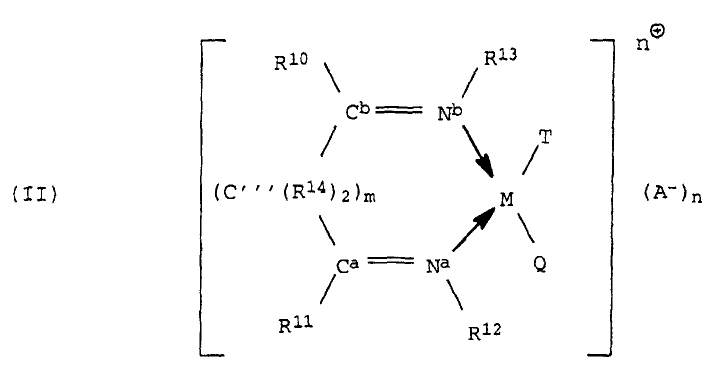 umgesetzt, in der die Substituenten und Indizes die folgende Bedeutung haben:
- R¹⁰, R¹¹: Wasserstoff, C₁- bis C₁₀-Alkyl, C₃- bis C₁₀-Cyclo-alkyl, C₆- bis C₁₆-Aryl, Alkylaryl mit 1 bis 10 C-Atomen im Alkyl- und 6 bis 14 C-Atomen im Arylteil oder Si(R¹⁵)₃, oder R¹⁰ und R¹¹ bilden gemeinsam mit C^{a}, C^{b} und gegebenenfalls C''' einen fünf-, sechs-oder siebengliedrigen aliphatischen oder aromatischen, substituierten oder unsubstituierten Carbo-oder Heterocyclus,
- R¹² R¹³: C₆- bis C₁₆-Aryl,
- R¹⁴: Wasserstoff, C₁- bis C₁₀-Alkyl, C₆- bis C₁₆-Aryl oder Alkylaryl mit 1 bis 10 C-Atomen im Alkyl- und 6 bis 14 C-Atomen im Arylteil,
- R¹⁵: C₁- bis C₁₀-Alkyl, C₆- bis C₁₆-Aryl oder Alkylaryl mit 1 bis 10 C-Atomen im Alkyl- und 6 bis 14 C-Atomen im Arylteil,

- m: 0 oder 1, bevorzugt 0,
- M: ein Metall der Gruppe VIII B des Periodensystems der Elemente,
- T, Q: neutrale oder monoanionische monodentate Liganden, vorzugsweise Acetonitril, Benzonitril, C₁- bis C₄-Alkylester, lineare oder cyclische Alkylether, Ethen, Dimethylsulfoxid, Dimethylformamid, Hexamethyl-phosphorsäuretriamid, Chlorid, Bromid, Jodid, Carboxylat, C₆- bis C₁₆-Aryl, Benzyl, Methyl oder ein Alkylrest, der in β-Position zum Metallzentrum M keine Wasserstoffatome aufweist, eine monodentate aliphatische oder aromatische Stickstoff- oder Phosphorverbindung, ein monodentates aliphatisches Keton, oder Q und T stellen gemeinsam einen bidentaten Liganden, beispielsweise eine C₃-Alkylenkette mit einer linearen C₁- bis C₄-Alkylester- oder einer Nitrilendgruppe, Cyclooctadien, Acetylacetonat oder Ethylendiamin dar,
- A: ein nicht oder schlecht koordinierendes Anion,
- n: 0, 1, 2 oder 3.

Unter den Resten R¹² und R¹³ sind unsubstituierte und substituierte, insbesondere substituierte Phenyl- und Naphthylgruppen bevorzugt. Besonders bevorzugt ist substituiertes Phenyl. Die Arylreste können einfach-, mehrfach oder persubstituiert sein, wobei Substituenten in ortho- und/oder in para-Position, insbesondere in ortho-Position zum Stickstoffatom N^{a} bzw. N^{b} bevorzugt sind. Besonders bevorzugt sind beide ortho-Positionen zum Stickstoffatom substituiert.

Als Substituenten der Arylgruppen R¹², R¹³ kommen funktionelle Gruppen auf der Basis der Elemente aus den Gruppen IVA, VA, VIA und VIIA des Periodensystems der Elemente in Frage. Geeignet sind beispielsweise geradlinig oder verzweigtes C₁- bis C₁₀-Alkyl, bevorzugt C₁- bis C₆-Alkyl, wie Methyl, Ethyl, n- oder i-Propyl, n-, i- oder t-Butyl, partiell oder perhalogeniertes C₁- bis C₁₀-Alkyl, bevorzugt C₁- bis C₆-Alkyl, wie Trifluor- oder Trichlormethyl oder 2,2,2-Trifluorethyl, Triorganosilyl, wie Trimehtyl-, Triethyl-, Tri-t-butyl-, Triphenyl- oder t-Butyl-diphenylsilyl, die Nitro-, Cyano- oder Sulfonatogruppe, Amino, beispielsweise NH₂, Dimethylamino, Di-i-propylamino, Di-n-butylamino, Diphenylamino oder Dibenzylamino, C₁- bis C₁₀-Alkoxy, bevorzugt C₁- bis C₆-Alkoxy, wie Methoxy, Ethoxy, i-Propoxy oder t-Butoxy, oder Halogen, wie Fluorid, Chlorid, Bromid oder Iodid.

Zum Beispiel kommen als Substituenten R¹², R¹³ 2-i-Propylphenyl, 2-t-Butylphenyl, 2-Trifluormethylphenyl sowie insbesondere 2,6-Di-i-propylphenyl, 2,6-Di-t-butylphenyl oder 2,6-Di-neo-pentylphenyl oder 2,6-Dibromo-4-methylphenyl in Betracht. Besonders bevorzugt ist 2,6-Di-i-propylphenyl.

Als bevorzugte zweizähnige Chelatliganden (IIa), also den komplexierenden Verbindungen, die zusammen mit dem Metall M, den Resten T und Q sowie gegebenenfalls mit dem Anion A den Übergangsmetallkomplex (II) bilden, seien exemplarisch genannt: Bis-N,N'-(2,6-diisopropylphenyl)-1,4-diaza-1,3-butadien, Bis-N,N'-(2,6-diisopropylphenyl)-1,4-diaza-2,3-dimethyl-1,3-butadien, Bis-N,N'-(2,6-dimethylphenyl)-1,4-diaza-1,3-butadien, Bis-N,N'-(2,6-dimethylphenyl)-1,4-diaza-2,3-dimethyl-1,3-butadien, Bis-N,N'-(1-naphthyl)-1,4-diaza-1,3-butadien und Bis-N,N'-(1-naphthyl-1,4-diaza-2,3-dimethyl-1,3-butadien.

Die zweizähnigen Liganden (IIa) können z.B. aus Glyoxal oder Diacetyl durch Umsetzung mit primären Aminen wie n-Butylamin, i-Butylamin, t-Butylamin, Cycolhexylamin, 2-Trifluormethylanilin, 2-Isopropylanilin, 2-t-Butylanilin, 1-Naphthylamin oder 2,6-Diisopropylanilin erhalten werden (s.a. G. van Koten und K. Vrieze in Advances in Organometallic Chemistry, Vol. 21, S. 152 - 234, Academic Press, 1982, New York).

Als Metalle M in (II) kommen alle Elemente der Gruppe VIIIB des Periodensystems der Elemente, also Eisen, Cobalt, Nickel, Ruthenium, Rhodium, Palladium, Osmium, Iridium oder Platin in Betracht. Bevorzugt werden Nickel, Rhodium, Palladium oder Platin eingesetzt, wobei Nickel und Palladium sowie insbesondere Palladium besonders bevorzugt sind. Eisen und Cobalt liegen in den Metallverbindungen (II) im allgemeinen zwei- oder dreifach positiv geladen vor, Palladium, Platin und Nickel zweifach positiv geladen und Rhodium dreifach positiv geladen vor.

T und Q stellen neutrale und/oder monoanionische Liganden dar. Als neutrale Liganden kommen Lewis-Basen in Frage, beispielsweise Acetonitril, Benzonitril, Diethylether, Tetrahydrofuran, Amine, Phosphane, Essigsäureethylester, Dimethylsulfoxid, Dimethylformamid oder Hexamethylphosphorsäuretriamid. Als Lewis-basischer Neutralligand ist ebenfalls Ethen geeignet. Monoanionische Liganden stellen zum Beispiel Carbanionen auf der Basis substituierter oder unsubstituierter Alkyl-, Aryl- oder Acylreste oder Halogenidionen dar.

Der Rest T in (II) bedeutet bevorzugt Chlorid, Bromid, Jodid, Methyl, Phenyl, Benzyl oder ein C₁- bis C₁₀-Alkyl, das in β-Position zum Metallzentrum M keine Wasserstoffatome aufweist und über eine C₁- bis C₄-Alkylester- oder eine Nitrilendgruppe verfügt. Besonders bevorzugt sind Chlorid und Bromid als Halogenide sowie Methyl als Alkylrest.

Der Rest Q stellt bevorzugt Acetonitril, Benzonitril, Ethen, Triphenylphosphin als monodentate Phosphorverbindung, Pyridin als monodentate aromatische Stickstoffverbindung, Acetat, Propionat oder Butyrat, insbesondere Acetat als geeignetes Carboxylat, einen linearen Alkylether, z.B. einen linearen Di-C₂- bis C₆-Alkylether wie Diethylether oder Di-i-propylether, bevorzugt Diethylether, einen cyclischen Alkylether wie Tetrahydrofuran oder Dioxan, bevorzugt Tetrahydrofuran, einen linearen C₁- bis C₄-Alkylester, z.B. Essigsäureethylester, Dimethylsulfoxid, Dimethylformamid, Hexamethylphosphorsäuretriamid oder ein Halogenid dar. Im Fall von Nickelkomplexen (II) (M = Ni) ist Q vorzugsweise ein Halogenid, z.B. ein Chlorid, Bromid oder Jodid, insbesondere ein Bromid, im Fall von Palladiumkomplexen (M = Pd) ist Q vorzugsweise Acetonitril, Diethylether oder Ethen.

Des weiteren können die Reste T und Q gemeinsam eine C₃-Alkylenkette mit einer linearen C₁- bis C₄-Alkylesterendgruppe oder mit einer Nitrilendgruppe darstellen. Bevorzugt stellen T und Q gemeinsam eine -(CH₂CH₂CH₂C(O)OCH₃-Einheit dar und bilden auf diese Weise zusammen mit M einen sechsgliedrigen Cyclus.

Unter den Nickelkomplexen (II) sind Nickeldihalogenid-, vorzugsweise Nickeldichlorid- oder Nickeldibromid-, oder Nickeldimethylkomplexe (n = 0) und unter diesen insbesondere die Nickeldibromidkomplexe bevorzugt. In bevorzugten Palladiumkomplexen stellt T einen Methylrest und Q einen neutralen Lewis-Baseliganden, inbesondere Diethylether, Acetonitril oder Ethen dar.

Unter einem nicht oder schlecht koordinierenden Anion A sind erfindungsgemäß solche Anionen zu verstehen, deren Ladungsdichte am anionischen Zentrum aufgrund eletronegativer Reste vermindert ist und/oder deren Reste das anionische Zentrum sterisch abschirmen. Geeignete Anionen A sind u.a. Antimonate, Sulfate, Sulfonate, Borate, Phophate oder Perchlorate wie B[C₆H₃(CF₃)₂]₄- (Tetrakis(3,5-bis-(trifluormethyl)phenyl)borat), B[C₆F₅]₄⁻ oder BF₄- sowie SbF₆-, AlF₄-, AsF₆⁻, PF₆⁻ oder Trifluoracetat (CF₃SO₃⁻). Bevorzugt sind B[C₆H₃(CF₃)₂]₄⁻, SbF₆⁻ und PF₆⁻. Besonders bevorzugt wird auf Borate, insbesondere B[C₆H₃(CF₃)₂]₄⁻, zurückgegriffen. Geeignete nicht oder schlecht koordinierende Anionen sowie deren Herstellung werden z.B. bei S.H. Strauss, Chem. Rev. 1993, 93, S. 927 - 942, sowie bei W. Beck und K. Sünkel, Chem. Rev. 1988, 88, S. 1405 - 1421, beschrieben.

Bevorzugte Übergangsmetallverbindungen (II) sind beispielsweise [Bis-N,N'-(2,6-diisopropylphenyl)-1,4-diaza-2,3-dimethyl-1,3-butadien]palladium-acetonitril-methyl-(tetrakis(3,5-bis-(trifluormethyl)phenyl)borat), [Bis-N,N'-(2,6-diisopropylphenyl)-1,4-diaza-2,3-dimethyl-1,3-butadien]palladium-diethylether-methyl-(tetrakis(3,5-bis-(trifluormethyl)phenyl)borat), [Bis-N,N'-(2,6-diisopropylphenyl)-1,4-diaza-2,3-dimethyl-1,3-butadien]-palladium-η¹-O-methylcarboxypropyl-(tetrakis(3,5-bis-(trifluormethyl)phenyl))borat), [Bis-N,N'-(2,6-diisopropylphenyl)-1,4-diaza-1,3-butadien]palladium-η¹-O-methylcarboxypropyl-(tetrakis(3,5-bis-(trifluormethyl)phenyl)borat) oder [Bis-N,N'-(1-naphthyl)-1,4-diaza-2,3-dimethyl-1,3-butadien]pallad ium-η¹-O-methylcarboxypropyl-(tetrakis(3,5-bis-(trifluormethyl)phenyl))borat).

Übergangsmetallverbindungen (II), in denen n = 1, 2, 3 oder 4 bedeutet, sind z.B. aus solchen Komplexen zugänglich, in denen Q für ein Halogenid, insbesondere ein Chlorid steht. Beispielsweise seien genannt [Bis-N,N'-(2,6-diisopropylphenyl)-1,4-diaza-2,3-dimethyl-1,3-butadien]palladium-methylchlorid oder [Bis-N,N'-(2,6-diisopropylphenyl)-1,4-diaza-1,3-butadien]palladium-methyl-chorid. In der Regel behandelt man diese Komplexe in Gegenwart von Acetonitril, Benzonitril, Dimethylsulfoxid, Dimethylformamid, Hexamethylphosphorsäuretriamid oder einem linearem oder cyclischen Ether wie Diethylether mit einem Alkali- oder Silbersalz (M')⁺A⁻ mit A in der bezeichneten Bedeutung eines nicht- oder schlechtkoordinierenden Anions und M' z.B. in der Bedeutung von Natrium, Kalium, Lithium, Caesium oder Silber, also z.B. Natrium-(tetra(3,5-bis-(trifluormethyl)phenyl)borat) oder Silberhexafluoroantimonat. Beispielhaft sei auf die bei Mecking et al., J. Am. Chem. Soc. 1998, 120, S. 888 - 899 beschriebene Herstellung verwiesen. Die Ausgangsverbindung, in der Q ein Halogenid darstellt, kann durch Behandlung eines entsprechenden Cyclooctadienkomplexes mit einem Liganden (IIa) in einem nicht-koordinierenden Lösungsmittel wie Dichlormethan erhalten werden. Derartige Herstellungsverfahren sind dem Fachmann bekannt und beispielsweise bei Johnson et al., J. Am. Chem. Soc. 1995, 117, S. 6414 und J.H. Groen et al., Organometallics, 1997, 17, S. 68 beschrieben. Für die Herstellung der Cyclooctadienkomplexe sei z.B. auf H. Tom Dieck et al., Z. Naturforschung, 1981, 36b, S. 823 und D. Drew und J.R. Doyle, Inorganic Synthesis, 1990, 28, S. 348 sowie auf die deutsche Patentanmeldung 19730867.8 verwiesen.

Die Übergangsmetallkomplexe (II) können ebenfalls ausgehend von Verbindungen wie (TMEDA)MMe₂ (TMEDA = N,N,N',N'-Tetramethylethylendiamin; Me = Methyl) erhalten werden. Die (TMEDA)-Komplexe sind zum Beispiel nach einer Vorschrift von de Graaf et al., Rec. Trav. Chim. Pay-Bas, 1988, 107, 299 aus den entsprechenden Dichloridkomplexen zugänglich.

Ausgangspunkt für die Herstellung der Übergangsmetallkomplexe (II) sind geeignete Metallsalze wie Cobalt(II)chlorid, Cobalt(II)bromid, Eisen(III)chlorid sowie insbesondere Nickel(II)chlorid, Rhodium(III)chlorid, Palladium(II)bromid, Palladium(II)chlorid oder Platin(II)chlorid. Besonders bevorzugt sind Nickel(II)bromid und Palladium(II)chlorid. Diese Metallsalze sowie deren Herstellung sind im allgemeinen literaturbekannt und häufig kommerziell erhältlich.

Geeignete Katalysatorkomplexe sowie deren Herstellung finden sich auch in der DE-A 19707236 und in der WO 96/23010 beschrieben.

Es hat sich als vorteilhaft erwiesen, insbesondere wenn in Schritt a) in Gegenwart von funktionalisierten Comonomeren (III) übergangsmetallkatalysiert polymerisiert wird, in geringen Mengen auch Radikalinhibitoren zuzusetzen. Als Radikalinhibitoren kommen mit sterisch anspruchsvollen Gruppen abgeschirmte aromatische Monohydroxyverbindungen, bevorzugt Phenole, die vicinal zur OH-Gruppe über mindestens eine sterisch anspruchsvolle Gruppe verfügen, in Betracht. Diese Radikalinhibitoren werden beispielsweise in der DE-A 27 02 661 (= US 4,360,617) beschrieben.

Geeignete phenolische Verbindungen sind den Verbindungsklassen der Alkylphenole, Hydroxyphenolpropionate, Aminophenole, Bisphenole oder Alkylidenbisphenole zu entnehmen. Eine weitere Gruppe geeigneter Phenole leitet sich von substituierten Benzoecarbonsäuren ab, insbesondere von substituierten Benzoepropionsäuren.

Exemplarisch für die Verbindungsklasse der sterisch gehinderten Phenole seien genannt Bis(2,6-tert-butyl)-4-methylphenol (BHT), 4-Methoxymethyl-2,6-di-tert-butylphenol, 2,6-Di-tert-butyl-4-hydroxymethylphenol, 1,3,5-Trimethyl-2,4,6-tris-(3,5-di-tert-butyl-4-hydroxybenzyl)-benzol, 4,4'-Methylen-bis-(2,6-di-tert-butylphenol), 3,5-Di-tert-butyl-4-hydroxybenzoesäure-2,4-di-tertbutylphenylester, 2,2-Bis-(4-hydroxyphenyl)propan (Bisphenol A), 4,4'-Dihydroxybiphenyl (DOD), 2,2'-Methylen-bis(4-methyl-6-tertbutylphenol), 1,6-Hexandiol-bis-3-(3,5-di-tert-butyl-4-hydroxyphenyl)propionat), Octadecyl-3-(3,5-bis(tert-butyl)-4-hydroxyphenyl)-propionat, 3,5-Di-tert-butyl-4-hydroxybenzyldimethylamin, 2,6,6-Trioxy-1-phosphabicyclo-(2.2.2)oct-4-yl-methyl-3,5-di-tertbutyl-4-hydroxyhydrozimtsäureester und N,N'-Hexamethylenbis-3,5-di-tert-butyl-4-hydroxyhydrozimtsäureamid. Unter den genannten sterisch gehinderten Phenolen sind Bis(2,6-(C₁- bis C₁₀-alkyl)-4-(C₁- bis C₁₀-alkyl)phenole, insbesondere Bis(2,6-tert-butyl)-4-methylphenol und Bis(2,6-methyl)-4-methylphenol bevorzugt. Besonders bevorzugt ist Bis(2,6-tert-butyl)-4-methylphenol.

Daneben können anstelle der sterisch gehinderten Phenole oder auch als Zusatz zu diesen als Radikalinhibitoren Tetraalkylpiperidin-N-oxylradikale eingesetzt werden. Geeignet sind z.B. 2,2,6,6-Tetramethyl-1-piperidinyloxy (TEMPO),
4-Oxo-2,2,6,6-tetramethyl-1-piperidinyloxy (4-Oxo-TEMPO), 4-Hydroxy-2,2,6,6-tetramethyl-1-piperidinyloxy, 2,2,5,5-Tetramethyl-1-pyrrolidinyloxy, 3-Carboxy-2,2,5,5-tetramethyl-pyrrolidinyloxy oder Di-tert-butylnitroxid.
2,6-Diphenyl-2,6-dimethyl-1-piperidinyloxy sowie 2,5-Diphenyl-2,5-dimethyl-1-pyrrolidinyloxy können ebenfalls eingesetzt werden. Mischungen verschiedener N-Oxyl-Radikale sind selbstverständlich auch möglich.

Die beschriebenen Radikalinhibitoren können entweder als solche oder gelöst in einem geeigneten inerten Lösungsmittel, z.B. Toluol oder einem halogenierten Kohlenwasserstoff wie Dichlormethan oder Chloroform, zugegeben werden.

In der Regel reichen bereits Mengen an einer mit sterisch anspruchsvollen Gruppen abgeschirmten aromatischen Monohydroxyverbindung oder einer mit sterisch anspruchsvollen Gruppen abgeschirmten N-Oxyl-Radikalverbindung kleiner 200, kleiner 100 oder sogar kleiner 20 ppm aus, bezogen auf die Ausgangsmenge an funktionalisierten olefinisch ungesättigten Monomeren, um einen einwandfreien Verlauf des erfindungsgemäßen Verfahrens zu gewährleisten. Dieses gelingt ebenfalls mit Mengen kleiner 10, 5 und sogar 2 ppm. Andererseits sind auch Konzentrationen an Radikalinhibitor zulässig, die die Konzentration der Übergangsmetallverbindung im Reaktionsgemisch um das doppelte, dreifache oder auch vierfache übersteigen.

Die Herstellung der Copolymere gemäß Schritt a) kann in einem unpolaren aliphatischen oder aromatischen aprotischen Lösungsmittel, z.B. in Heptan, i-Butan, Toluol oder Benzol, ebenso wie in einem polaren aprotischen Lösungsmittel durchgeführt werden. Geeignete polare aprotische Lösungsmittel sind z.B. halogenierte Kohlenwasserstoffe wie Dichlormethan, Chloroform, Tetrachlorkohlenstoff oder Chlorbenzol, lineare oder cyclische Ether wie Diethylether oder Tetrahydrofuran, des weiteren Aceton, Dimethylsulfoxid, Dimethylformamid, Hexamethylphosphorsäuretriamid oder Acetonitril. Selbstverständlich können auch beliebige, vorzugsweise homogene Mischungen der vorgenannten Lösungsmittel eingesetzt werden. Besonders bevorzugt sind Dichlormethan, Chloroform, Toluol, Chlorbenzol und Acetonitril sowie deren Mischungen.

Die Lösungsmittelmenge wird üblicherweise so bestimmt, daß die Ausgangsverbindungen zu Beginn der Reaktion in gelöster Form vorliegen. Das übergangsmetallkatalysierte Polymerisationsverfahren gemäß Schritt a) kann auch in Masse durchgeführt werden.

Üblicherweise wird die Copolymerisation gemäß Schritt a) bei Temperaturen im Bereich von -40 bis 160°C, bevorzugt im Bereich von -20 bis 100°C und besonders bevorzugt von 0 bis 80°C durchgeführt. Die Reaktionszeiten liegen im allgemeinen in Abhängigkeit von den gewählten Reaktionsbedingungen zwischen 1 bis 2 Stunden und mehreren Tagen. Gasförmige Reaktionskomponenten wie Ethen werden auf das Reaktionsgemisch aufgepreßt.

Die Copolymerisation nach Schritt a) findet im allgemeinen bei einem Druck im Bereich von 0,1 bis 200 bar, bevorzugt von 0,5 bis 100 bar und besonders bevorzugt von 1 bis 80 bar statt.

Die Konzentration an Übergangsmetallverbindung (II) wird im allgemeinen auf Werte im Bereich von 10⁻⁶ bis 0,1, bevorzugt im Bereich von 10⁻⁵ bis 10⁻² und besonders bevorzugt im Bereich von 5 x 10⁻⁵ bis 5 x 10⁻² mol/l eingestellt.

Die Ausgangskonzentration der Comonomeren (I) und (III) liegen im allgemeinen im Bereich von 10⁻⁵ bis 12 mol/l, bevorzugt von 10⁻² bis 10 mol/l und besonders bevorzugt von 10⁻¹ bis 8 mol/l. Die Ausgangskonzentration des unpolaren Comonomeren (IV) liegt in der Regel im Bereich von 10⁻³ bis 10 mol/l, bevorzugt im Bereich von 10⁻² bis 5 mol/l.

Die Copolymerisation kann durch Desaktivierung der Übergangsmetallverbindung, beispielsweise mit einer Phosphinverbindung wie Triphenylphosphin, die man im allgemeinen in gelöster Form zum Reaktionsgemisch gibt, schonend beendet werden. Das gebildete Comonomer kann anschließend in einem polaren protischen Medium, z.B. Methanol oder Ethanol, ausgefällt und isoliert werden.

Weitere Details zur Durchführung der Reaktion gemäß Schritt a) können den deutschen Patentanmeldungen mit dem Aktenzeichen DE 19812124.5 entnommen werden.

Nach Schritt a) wird ein verzweigtes bzw. hochverzweigtes Polymer aus Ethenbausteinen mit eingebauten Comonomereinheiten (I) sowie gegebenenfalls (III) und/oder (IV) erhalten. Dieses Copolymer zeichnet sich durch ein elastisches Eigenschaftsprofil aus und verfügt über eine amorphe Mikrostruktur, die allenfalls in geringem Umfang teilkristalline Bereiche aufweist. Bevorzugt ist eine amorphe Mikrostruktur. In den nach Schritt a) erhältlichen Copolymeren liegen regelmäßig pro 1000 C-Atome in der Kohlenwasserstoffhauptkette 10 bis 350, bevorzugt 30 bis 200 und besonders bevorzugt 50 bis 150 Alkanverzweigungen, die auf die übergangsmetallkatalysierte Polymerisation von Ethen zurückgehen, vor. Darüber hinaus werden in diese Copolymere regelmäßig 1 bis 30, bevorzugt 1 bis 20 und besonders bevorzugt 1 bis 10 Comonomere (I) pro 1000 C-Atome in die Kohlenwasserstoffhauptkette eingebaut. Sofern auch Comonomere (III) eingesetzt werden, werden hiervon im allgemeinen pro 1000 C-Atome 3 bis 50, bevorzugt 5 bis 40 und besonders bevorzugt 6 bis 30 Einheiten eingebaut.

Copolymere nach Schritt a) verfügen über eine Glasübergangstemperatur (T_{g}-Wert) kleiner -20°C, bevorzugt kleiner -40°C und besonders bevorzugt kleiner -60°C. Die T_{g}-Werte können mit Hilfe der Differentialthermokalorimetrie (DSC) ermittelt werden.

Die nach Schritt a) erhaltenen Copolymere verfügen üblicherweise über Molekulargewichte Mₙ (Zahlenmittel) größer 10.000 g/mol, können aber auch Werte größer 45.000 g/mol annehmen. Die Molekulargewichtsverteilung M_{w}/Mₙ liegt im allgemeinen im Bereich von 1,1 bis 3,0, bevorzugt im Bereich von 1,1 bis 2,0. Molekulargewicht und Molekulargewichtsverteilung lassen sich mittels Gelpermeationschromatographie gegen Polyethylenstandards ermitteln.

Das nach Schritt a) erhaltene Copolymer überführt man gemäß dem erfindungsgemäßen Verfahren in einem weiteren Reaktionsschritt (Schritt b)) unter kontrolliert radikalischen Polymerisationsbedingungen in das erfindungsgemäße Pfropfcopolymerisat. Die kontrolliert radikalische Polymerisation wird bevorzugt thermisch induziert, d.h. Start und Fortgang der Polymerisation hängen von der dem Polymerisationsgemisch zugeführten Wärmemenge ab. Das Gleichgewicht zwischen freien Polymerkettenenden und reversibel durch N-Oxyl-Radikale unter Ausbildung von Alkoxyaminresten blokkierten Kettenenden ist temperaturabhängig. Bei erhöhter Temperatur liegt eine größere Anzahl freier Polymerkettenenden vor. Demgemäß wird die Polymerisationsreaktion nach Verfahrensschritt b) in Abhängigkeit von der Natur des in das Copolymer nach Schritt a) eingebauten Alkoxyaminrestes bei Temperaturen von 0 bis 200, bevorzugt von 70 bis 160 und besonders bevorzugt von 80 bis 150°C durchgeführt. Des weiteren kann die kontrolliert radikalische Polymerisation auch unter photochemischen Bedingungen durchgeführt werden. Die beschriebenen Alkoxyaminreste im Copolymer nach Schritt a) werden bei dieser Variante mittels UVoder γ-Strahlung homolytisch gespalten.

Die Reaktion wird in Gegenwart von radikalisch polymerisierbaren Monomerverbindungen, ausgewählt aus der Gruppe bestehend vinylaromatischen Verbindungen, vinylheteroaromatischen oder vinylheteroalicyclischen Verbindungen, Alkylestern oder -amiden der (Meth)acrylsäure, Acrylnitril, Methacrylnitril, Maleimid oder Vinylferrocen oder deren Mischungen durchgeführt. Gegebenenfalls können auch konjugierte organische Diene, wie z.B. Butadien oder Isopren zugesetzt werden.

Als vinylaromatische Monomere kommen grundsätzlich solche der allgemeinen Formel (V) 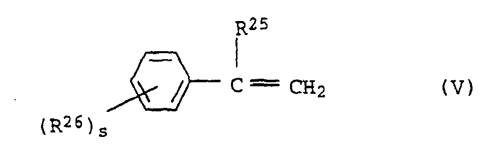 in Frage, in der die Substituenten und Indizes die folgende Bedeutung haben:
- R²⁵, R²⁶: unabhängig voneinander Wasserstoff, C₁- bis C₁₀-Alkyl, insbesondere Methyl, Ethyl, i-Propyl oder t-Butyl, C₂- bis C₁₀-Alkenyl, insbesondere Ethyliden oder Propyliden, C₆- bis C₁₆-Aryl, insbesondere Phenyl, oder Halogen, insbesondere Chlorid oder Bromid,
- s: 0, 1, 2 oder 3, insbesondere 0, 1 oder 2.

Besonders geeignete unsubstituierte Monomere (V) sind Styrol und Divinylbenzol sowie annellierte aromatische Systeme wie 2-Vinylnaphthalin und 9-Vinylnaphthalin, des weiteren als substituierte vinylaromatische Monomere p-Methylstyrol, α-Methylstyrol, o-Chlorstyrol, p-Chlorstyrol, 2,4-Dimethylstyrol, 4-Vinylbiphenyl oder Vinyltoluol. Selbstverständlich können auch Gemische der vorgenannten Verbindungen eingesetzt werden. Besonders bevorzugt ist Styrol.

Als vinylheteroaromatische und - alicyclische Verbindungen sind zum Beispiel 2-Vinylpyridin, 2-Vinylchinolin, 2-Vinylpyrrolidin, 2-Vinylpyrrolidon oder N-Vinylcarbazol geeignet.

Unter den Alkylestern der (Meth)acrylsäure sind solche, die auf Alkanole mit 1 bis 20, bevorzugt 1 bis 12, besonders bevorzugt 1 bis 8 Kohlenstoffatomen zurückgehen, geeignet. Hervorzuheben sind Methyl-, Ethyl-, n-, i- und t-Butyl-, 2-Ethylhexyl(meth)acrylat sowie Glycidyl(meth)acrylat, insbesondere n-Butyl- und 2-Ethylhexylacrylat, Glycidyl(meth)acrylat und Methylmethacrylat.

Unter den Alkylamiden der (Meth)acrylsäure sind solche, die auf Alkylamine mit 1 bis 20, bevorzugt 1 bis 12, besonders bevorzugt 1 bis 8 Kohlenstoffatomen zurückgehen, geeignet. Hervorzuheben sind N,N-Dimethyl-, N,N-Di-ethyl- und N,N-i-Propyl(meth)acrylamid.

Geeignete Maleimide verfügen am Imidstickstoff in der Regel über einen C₁- bis C₂₆-Alkyl-, C₃- bis C₂₆-Alkenyl-, C₆- bis C₁₆-Aryl-, C₃- bis C₁₀-Cycloalkyl- oder über einen Alkylarylsubstituenten mit 1 bis 10 C-Atomen im Alkyl- und 6 bis 16 C-Atomen im Arylrest. Als geeigneter Cycloalkylsubstituent sei Cyclohexyl genannt. Als Alkylsubstituenten kommen geradkettiger und verzweigte sowie substituierte und unsubstituierte Reste in Frage. Die Alkylreste können beispielsweise mit Hydroxy-, Alkoxy-, Ester-, Amid- oder Carbonsäuregruppen ein- oder mehrfach substituiert sein, wobei die genannten funktionellen Gruppen auch die terminale Position des Alkylrestes einnehmen können. Geeignete Alkenylsubstituenten leiten sich zum Beispiel von der Öl-, Linol-, Linolen- oder Ricinolsäure ab.

Besonders bevorzugt werden in dem Verfahrensschritt b) als radikalisch polymerisierbare Monomere Styrol, α-Methylstyrol, Divinylbenzol, Vinyltoluol, C₁- bis C₈-Alkyl(meth)acrylate, unter diesen insbesondere n-Butylacylat, 2-Ethylhexylacrylat oder Methylmethacrylat, oder Acrylnitril eingesetzt. Selbstverständlich können auch beliebige Gemische der vorgenannten Monomeren, z.B. Styrol mit Acrylnitril oder Styrol mit Acrylnitril und einem, zwei, drei oder vier (Meth)acrylatmonomeren verwendet werden. Besonders geeignete Gemische sind z.B. Styrol/Acrylnitril, Styrol/(Meth)acrylat, beispielsweise Methyl-, Ethyl-, 2-Ethylhexyl-, Butyl- oder Glycidyl(meth)acrylat, Styrol/N-Vinylcarbazol, Styrol/N-Cyclohexylmaleimid, Styrol/4-Acetoxystyrol, Styrol/N,N-Dimethylacrylamid oder Styrol/Vinylferrocen. In einer weiteren Ausführungsform werden in Schritt b) als zusätzliche radikalisch polymerisierbare Comomomere neben den genannten Monomeren konjugierte organische Diene, bevorzugt Butadien oder Isopren, insbesondere Butadien eingesetzt. Der Anteil an in die Pfropfcopolymeräste eingebautes konjugiertes organisches Dien liegt maximal im Bereich von 35 Gew.-%, bezogen auf das Gesamtgewicht der an das Pfropfcopolymerrückgrat angeknüpften Pfropfäste.

In den binären oder höheren Ausgangsgemischen des Verfahrensschrittes b) enthaltend vinylaromatische und/oder vinylheteroaromatische Monomerverbindungen beträgt deren Anteil bevorzugt 30 bis 99, bevorzugt 40 bis 95, besonders bevorzugt 55 bis 90 Gew.-%, bezogen auf das Gesamtgewicht der eingesetzten Monomeren in Schritt b). Der Anteil der weiteren radikalisch polymerisierbaren Monomeren ergänzt sich jeweils zu 100%. Verwendet man neben Styrol Acryl- oder Methacrylnitril als weitere Monomere, so beträgt deren Anteil, bezogen auf das Gesamtgewicht der eingesetzten Monomeren in Schritt b), bevorzugt 10 bis 40, besonders bevorzugt 15 bis 35 und insbesondere 20 bis 30 Gew.-%.

Die gemäß Verfahrensschritt b) erhaltenen Pfropfäste verfügen über ein thermoplastisches Eigenschaftsprofil. Setzt man in Schritt b) nur eine Monomerkomponente ein, erhält man homopolymere Pfropfäste. Dagegen liefert ein Monomerengemisch üblicherweise copolymere Pfropfäste, in denen die Comonomeren in statistischer Verteilung vorliegen. Bei sequentieller Zugabe unterschiedlicher radikalisch polymerisierbarer Monomere in Schritt b) bilden die Pfropfcopolymeräste eine Blockstruktur aus. Diese Blockstruktur kann bei Mitverwendung von zum Beispiel konjugierten Dienen wie Butadien über elastomere Teilblöcke verfügen.

Zur Beschleunigung der kontrolliert radikalischen Polymerisation können in dem Verfahrensschritt b) zum Beispiel auch geringe Mengen an einem Acylierungsreagenz wie Essigsäureanhydrid oder Benzoylchlorid zugesetzt werden (s.a. Malmström und Hawker, Macromol. Chem. Phys., 1998, Vol. 199, S. 923 bis 935).

Der Verfahrensschritt b) kann als Masse (=Bulk)-, Lösungs-, Suspensions-, Mikrosuspensions-, Emulsions- oder Miniemulsionspolymerisation kontinuierlich oder diskontinuierlich durchgeführt werden. Aus präparativen Gründen wird die Polymerisation häufig in Masse durchgeführt, wobei es sich aus verfahrenstechnischen Gründen als vorteilhaft erweisen kann, die Polymerisation bei unvollständigem Umsatz zu beenden und nicht umgesetztes Monomer gegebenenfalls in einem weiteren Ansatz zu verwenden. Die zur Polymerisation eingesetzten Apparaturen richten sich nach den entsprechenden Polymerisationsverfahren.

Im Abhängigkeit vom Polymerisationsverfahren können geeignete weitere Zusätze zugegeben werden. In einem Mikrosuspensionspolymerisationsverfahren können zum Beispiel für die Stabilisierung der Emulsion geeignete Schutzkolloide zugegeben werden. Solche Schutzkolloide sind wasserlösliche Polymere, die die Monomerentröpfchen und die daraus gebildeten Polymerteilchen umhüllen und auf diese Weise vor der Koagulation schützen. Geeignete Schutzkolloide sind in der prioritätsälteren Anmeldung DE-A-19 803 098 genannt. In Emulsionspolymerisationsverfahren werden des weiteren für die Stabilisierung der Emulsion geeignete Emulgatoren zugegeben. Diese sind seifenartige Hilfsstoffe, die die Monomerentröpfchen umhhüllen und auf diese Weise vor dem Zusammenlaufen schützen. Des weiteren können Zusatzstoffe zugefügt werden, die den Polymerisaten bestimmte Eigenschaften verleihen. Beispielhaft seien als solche Zusatzstoffe Polymere, Farbstoffe und Pigmente, z.B. ferromagnetische Pigmente, genannt. Der Anteil der Zusatzstoffe beträgt in der Regel mindestens 0,1 Gew.-%, bevorzugt mindestens 0,5 Gew.-%, bezogen auf die Gesamtmasse der Polymermischung.

Die Aufarbeitung und Isolierung des Pfropfcopolymeren erfolgt jeweils in Abhängigkeit vom angewandten Polymerisationsverfahren durch Filtration oder durch Ausfällen und Filtration (Verfahrensschritt c) bzw. d')).

Falls aus technischen oder sonstigen Gründen erforderlich oder gewünscht, können die Alkoxyaminreste auch reduktiv entfernt werden (Verfahrensschritt c')). Hierfür eignet sich zum Beispiel ein Zink/Essigsäure-Gemisch, das hydroxyterminierte Pfropfäste liefert. Des weiteren kann die Alkoxyamineinheit mittels Reaktion mit Hydrogendonatoren wie z.B. Thiolverbindungen unter Ausbildung von hydrierten Pfropfastenden freigesetzt werden (s.a. D. Colombani, Prog. Polym. Sci., 1997, Vol. 22, S. 1649 bis 1720). Hieran schließt sich dann der Aufarbeitungs- und Isolierungsschritt an (Verfahrensschritt d')).

Ohne reduktive Abspaltung der Alkoxyamineinheit verbleibt diese an den Kettenenden der Pfropfäste und kann entweder unmittelbar, d.h. ohne Aufarbeitung und Isolierung, oder im Anschluß an die Aufarbeitung und Isolierung oder zu einem späteren Zeitpunkt für Folgereaktionen, also zum Beispiel für die Anknüpfung eines weiteren Copolymerblockes verwendet werden. Bei sequentieller Zugabe der vorgehend bezeichneten radikalisch polymerisierbaren Monomeren können Pfropfcopolymeräste in Form von Blockcopolymeren angeknüpft werden.

Nach dem erfindungsgemäßen Verfahren werden bevorzugt solche Pfropfäste an das Copolymer nach Schritt a) angeknüpft, die, wenn sie isoliert vorlägen, eine Glasübergangstemperatur größer 0°C, bevorzugt größer 20°C und besonders bevorzugt größer 60°C aufweisen würden.

Die gemäß Schritt b) an das Copolymerrückgrat angeknüpften Pfropfäste verfügen üblicherweise über Molekulargewichte Mₙ (Zahlenmittel) größer 5.000 g/mol. In Abhängigkeit von den Reaktionsparametern wie Comonomermenge und/oder Reaktionsdauer in Schritt b) lassen sich auch Molekulargewichte im Bereich von 10.000 bis 50.000 g/mol ohne weiteres erreichen.

Die Polydispersität (M_{w}/Mₙ) der Pfropfcopoylmerisate liegt im allgemeinen oberhalb von 1,2 und nimmt bevorzugt Werte im Bereich von 1,3 bis 5,0 und besonders bevorzugt von 1,5 bis 4,0 an. Die mittleren Molmassen Mₙ (Zahlenmittel) der Pfropfcopolymerisate liegen in der Regel im Bereich von 10.000 bis 150.000, besonders häufig im Bereich von 20.000 bis 100.000 g/mol, können aber auch höhere Werte annehmen im Bereich von 300.000 g/mol.

Nach dem erfindungsgemäßen Verfahren lassen sich Pfropfcopolymerisate herstellen, die sich in besonderer Weise als Phasenvermittler für Polymermischungen aus nicht kompatiblen Polymerkomponenten eignen. Beispielsweise bilden die ansonsten nicht mischbaren Polymeren Polypropylen und Polystyrol in Gegenwart der genannten Pfropfcopolymeren über den gesamten Zusammensetzungsbereich einen Blend mit homogener Struktur. Bei der Verwendung polarer Polymermatrices, z.B. von Polyamiden oder Styrolcopolymeren wie Poly(styrol-co-acrylnitril), in Polymermischungen haben sich auch Pfropfcopolymerisate, in deren Pfropfcopolymerrückgrat Comonomer (III) miteingebaut worden ist, als vorteilhaft erwiesen. Die erfindungsgemäßen Pfropfcopolymerisate eignen sich außerdem als Zähmodifier, insbesondere auch als Zähmodifier, der bei tiefen Temperaturen (< -40°C) seine kautschukelastischen Eigenschaften nicht verliert, z.B. für technische Kunststoffe wie Polyamide, Polyester, Polysulfone, Polyetherketone, Polyketone oder Styrolcopolymere (z.B. ABS oder ASA).

Das erfindungsgemäße Verfahren zeichnet sich u.a. dadurch aus, daß keine Nebenprodukte, z.B. in Form von Homopolymeren oder Vernetzungsprodukten anfallen und daß ein Pfropfcopolymer mit wohldefinierter Zusammensetzung erhalten wird. Die erfindungsgemäßen Pfropfcopolymerisate verfügen, sofern die Pfropfcopolymeräste keine Blockstruktur aufweisen, über zwei Glasübergangstemperaturwerte, wobei die durch das Pfropfcopolymerrückgrat gebildete Phase ein elastisches und die durch die Pfropfäste gebildete Phase in der Regel ein thermoplastisches Eigenschaftsprofil zeigen. Die erfindungsgemäßen Pfropfcopolymerisate weisen eine Mikrophasenseparierung auf und zeigen z.B. für ein Pfropfcopolymer mit Polystyrolpfropfästen eine geordnete, lamellare Struktur.

Die vorliegende Erfindung wird anhand der nachfolgenden Beispiele zusätzlich erläutert.

### Beispiele

Die ¹³C-NMR- und ¹H-NMR-Untersuchungen wurden in CDCl₃ an einem 300 MHz-Gerät der Firma Bruker durchgeführt. DSC (Differentialthermokalometrie)-Messungen wurden mit einem Gerät der Firma Perkin-Elmer, Serie 7, bei einer Heizrate von 10 K/min vorgenommen. Die mittleren Molekulargewichte der Copolymeren und Pfropfcopolymeren wurden mittels Gelpermeationschromatographie (Knauer Mikrogelset A 20) mit Chloroform als Eluens gegen Polystyrolstandard bestimmt. Für die TEM (Transmissionselektronenmikroskopie)-Aufnahmen wurden mit RuO₄ kontrastierte Kryoultradünnschnitte der Copolymerproben an einem Elektronenmikroskop der Firma LEO EM 912 Omega (Beschleunigungsspannung 120 kV) untersucht (der Polyethylenanteil ist darin hell wiedergegeben).
A) Herstellung des Comonomeren (I)
a) Herstellung von 2,2,6, 6-Tetramethyl-1-(2-hydroxy-1-phenylethoxy)piperidin
Die Synthese erfolgte gemäß der bei Hawker et al., Macromolecules, 1996, Vol. 29, S. 5245 bis 5254 beschriebenen Vorschrift.
b) Herstellung von Undecensäure-2-phenyl-2-(2',2',6',6'-tetramethyl-1'-piperidinyloxy)ethylester (I)
Zu 2,2,6,6-Tetramethyl-1-(2-hydroxy-1-phenylethoxy)piperidin (4,70 g) und 10-Undecensäure (2,82 g) in Dichlormethan (110 ml) gab man bei 0°C Dicyclohexylcarbodiimid (3,47 g) und Dimethylaminopyridin (0,133 g) und rührte 4 h bei dieser Temperatur. Das Reaktionsgemisch wurde eingeengt und säulenchromatographisch (Dichlormethan/Cyclohexan = 9:1) gereinigt. Ausbeute: 5,54 g.
B) Herstellung eines Pfropfcopolymerrückgrats gemäß Verfahrensschritt a)
Eine unter Argonatmosphäre in einem 1-l Glasreaktor auf 35°C erwärmte Lösung von Undecensäure-2-phenyl-2-(2',2',6',6'-tetramethyl-1'-piperidinyloxy)ethylester (I) (die eingesetzte Menge ist für den jeweiligen Fall der Tabelle 1 zu entnehmen) in Dichlormethan (200 ml) wurde mit Ethen bei einem Druck von 3 bar mit Hilfe von Masseflußmessern (F-111C, Bronkhorst, Niederlande) gesättigt. Die Copolymerisation wurde durch Zugabe von [Diacetylbis-(2,6-di-i-propylanilin)palladium(methyl)(acetonitril)](tetra(3,5-bis-(trifluormethyl)phenyl)borat (0,05 mmol) in Dichlormethan (10 ml) gestartet und nach 3 h durch Zugabe von Triphenylphosphin (0,2 mmol in 10 ml Dichlormethan) beendet. Das gebildete Copolymer wurde in Methanol (1 l) ausgefällt, nach erneutem Auflösen in Dichlormethan (50 ml) und Ausfällen in Toluol/Methanol (1:2, 200 ml) isoliert und bei 60°C im Vakuum von letzten Lösungsmittelresten befreit.
Tabelle 1 faßt Verfahrens- und Produktparameter der nach B) erhaltenen Copolymere zusammen.

**Tabelle 1**

| Bsp. | (I) [mol/l]^{a)} | Aktivität^{b)} | (I) [mol%] ^{c)} | Alkyl/ 1000 C^{d)} | T_{g} [°C] ^{e)} | Mₙ [g/mol] ^{f)} | M_{w}/Mₙ ^{f)} |
|---|---|---|---|---|---|---|---|
| 1 | 0,02 | 113,2 | 0,06 | 99 | -67,8 | 45900 | 1,57 |
| 2 | 0,05 | 48,4 | 0,26 | 101 | -66,9 | 14200 | 1,70 |

| | | | | | | | |
|---|---|---|---|---|---|---|---|
| a) Ausgangskonzentration von Comonomer (I) in B); | | | | | | | |
| b) [(kg_{Polymer}) /mol_{Katalysator} x mol/l_{Ethen} x h)]; | | | | | | | |
| c) Anteil an in das Copolymer nach Verfahrensschritt a) (s.a. II.)) eingebaute Comonomereinheiten (I), bestimmt mittels ¹³C- und ¹H-NMR-Spektroskopie; | | | | | | | |
| d) Anzahl der Alkylverzweigungen im Copolymer nach Verfahrensschritt a), bestimmt mittels ¹³C-NMR-Spektroskopie; | | | | | | | |
| f) Bestimmt mittels DSC mit einer Heizrate von 10K/min; g) Bestimmt mittels Gelpermeationschromatographie gegen einen Polystyrolstandard. | | | | | | | |

C) Allgemeine Verfahrensvorschrift für die Herstellung von erfindungsgemäßen Pfropfcopolymeren (Schritt b)
1.) Pfropfung in Gegenwart von Styrol
Das nach B) - Bsp. 1 bzw. B) - Bsp. 2 erhaltene Copolymer (s.a. Tabellen 1 und 2) wurde in Styrol (1,2 ml) gelöst, die Lösung mittels Durchleiten von Argon entgast, auf 140°C erwärmt und 150 min bei dieser Temperatur gerührt. Nach Abkühlen auf Raumtemperatur wurde Toluol (10 ml) zugegeben, die Reaktionsmischung aus Methanol (50 ml) ausgefällt und das erhaltene Produkt 24 h bei 60°C im Vakuum von letzten Lösungsmittelresten befreit.
Die Tabellen 2 und 3 geben die Verfahrens- und Produktparameter der nach C) erhaltenen Pfropfcopolymerisate wieder.

**Tabelle 2:**

| Pfropfcopolymerisation des Copolymers nach B) - Bsp. 1 (kurz B/1) in Styrol | | | | | | | | |
|---|---|---|---|---|---|---|---|---|
| Bsp. | (B/1) [g/ml] ^{b)} | Umsatz [%] | Mₙ [g/mol] ^{c)} | M_{w}/Mₙ ^{c)} | (B/1) T_{g} [°C] ^{d)} | PS^{f)} T_{g} [°C] | PS-Einbau [mol-%] ^{g)} | PSEinbau [%] ^{h)} |
| 3^{a)} | - | - | 45900 | 1,57 | -67,8 | - | - | - |
| 4 | 0,76 | 53,4 | 65200 | 2,09 | -66,4 | 100,2 | 16,6 | 39,0 |
| 5 | 0,38 | 50,8 | 85200 | 2,32 | -68,8 | 99.5 | 28,8 | 54,9 |
| 6 | 0,20 | 49,1 | 87700 | 3,33 | n.b.^{e)} | 100,3 | 40,8 | 68,9 |

| | | | | | | | | |
|---|---|---|---|---|---|---|---|---|
| a) Ausgangspolymer; | | | | | | | | |
| b) Ausgangskonzentration an Pfropfcopolymerrückgrat; | | | | | | | | |
| c) Bestimmt mittels Gelpermeationschromatographie gegen einen Polystyrolstandard; | | | | | | | | |
| d) Glasübergangstemperatur des im Pfropfcopolymerisat vorliegenden Pfropfcopolymerrückgrats, bestimmt mittels DSC mit einer Heizrate von 10K/min; | | | | | | | | |
| e) n.b. = nicht bestimmt; | | | | | | | | |
| f) Glasübergangstemperatur der im Pfropfcopolymerisat vorliegenden Pfropfcopolymeräste aus Polystyrol (= PS), bestimmt mittels DSC mit einer Heizrate von 10K/min; | | | | | | | | |
| g) Anteil an in das Pfropfcopolymer eingebauten Polystyrolseitenästen, bestimmt mittels ¹³C- und ¹H-NMR-Spektroskopie; | | | | | | | | |
| h) Anteil an in das Pfropfcopolymer eingebauten Polystyrolseitenästen, gravimetrisch ermittelt. | | | | | | | | |

**Tabelle 3:**

| Pfropfcopolymerisation des Copolymers nach B) - Bsp. 2 (kurz B/2) in Styrol | | | | | | | | |
|---|---|---|---|---|---|---|---|---|
| Bsp. | (B/2) [g/ml] ^{b)} | Umsatz [%] | Mₙ [g/mol] ^{c)} | M_{w}/Mₙ ^{c)} | (B/2) T_{g} [°C] ^{d)} | PS^{e)}T_{g} [°C] | PS-Einbau [mol-%] ^{g)} | PSEinbau [%] ^{h)} |
| 7^{a)} | - | - | 14200 | 1,70 | -66,9 | - | - | - |
| 8 | 0,76 | 25,6 | 23600 | 1,48 | -68,1 | n.b.^{f)} | 10,4 | 23,5 |
| 9 | 0,38 | 32,0 | 36500 | 1,47 | -67,0 | 76,2 | 23,7 | 46,6 |
| 10 | 0,20 | 67,7 | 39700 | 1,68 | -67,7 | 82,7 | 33,2 | 75,4 |

| | | | | | | | | |
|---|---|---|---|---|---|---|---|---|
| a) Ausgangspolymer; | | | | | | | | |
| b) Ausgangskonzentration an Pfropfcopolymerrückgrat; | | | | | | | | |
| c) Bestimmt mittels Gelpermeationschromatographie gegen einen Polystyrolstandard; | | | | | | | | |
| d) Glasübergangstemperatur des im Pfropfcopolymerisat vorliegenden Pfropfcopolymerrückgrats, bestimmt mittels DSC mit einer Heizrate von 10K/min; | | | | | | | | |
| e) Glasübergangstemperatur der im Pfropfcopolymeren vorliegenden Pfropfcopolymeräste aus Polystyrol (= PS), bestimmt mittels DSC mit einer Heizrate von 10K/min; | | | | | | | | |
| f) n.b. = nicht bestimmt; | | | | | | | | |
| g) Anteil an in das Pfropfcopolymere eingebauten Polystyrolseitenästen, bestimmt mittels ¹³C- und ¹H-NMR-Spektroskopie; | | | | | | | | |
| h) Anteil an in das Pfropfcopolymere eingebauten Polystyrolseitenästen, gravimetrisch ermittelt. | | | | | | | | |

Anhand einer an einer Probe des Beispiels 10 vorgenommenen TEM-Aufnahme ließ sich die lamellare Struktur des Pfropfcopolymerisats ohne weiteres erkennen.
Bei einer Untersuchung der Reaktionskinetik der Pfropfung von Copolymer B/1 in Styrol wurde beobachtet, daß die Molmasse linear mit dem Umsatz steigt. Es wurde eine Kinetik 1. Ordnung bezogen auf Styrol festgestellt. Dieses Resultat ist ein Beleg für eine kontrolliert radikalische Anpolymerisation von Styrol an das Pfropfcopolymerrückgrat.
2.) Pfropfung in Gegenwart von Styrol und Acrylnitril
Das nach B) - Bsp. 1 erhaltene Copolymer (s.a. Tabellen 1 und 4) wurde in einem 50 ml-Autoklaven in Styrol (3,54 ml) und Acrylnitril (1,46 ml) gelöst. Die Lösung wurde mittels Durchleiten von Argon entgast, auf 120°C erwärmt und für 120 min bei dieser Temperatur gerührt. Nach Abkühlen auf Raumtemperatur wurde Toluol (10 ml) zugegeben, die Reaktionsmischung aus Methanol (50 ml) ausgefällt und das erhaltene Produkt 24 h bei 60°C im Vakuum von letzten Lösungsmittelresten befreit.
Die Tabelle 4 gibt die Verfahrens- und Produktparameter der nach C) - 2.) erhaltenen Pfropfcopolymerisate wieder.

| Tabelle 4: Pfropfcopolymerisation des Copolymers nach B) - Bsp. 1 (kurz B/1) in Styrol/Acrylnitril | | | | | | | | |
|---|---|---|---|---|---|---|---|---|
| Bsp. | (B/1) [g/ml] ^{b)} | Umsatz [%] | Mₙ [g/mol] ^{c)} | M_{w}/Mₙ ^{c)} | (B/1) T_{g} [°C] ^{d)} | PSAN^{f)} T_{g} [°C] | PSAN-Einbau [mol-%] g) | PSAN-Einbau [%] h) |
| 11^{a)} | - | - | 45900 | 15,7 | -67,8 | - | - | - |
| 12 | 0,38 | 14,2 | 66700 | 1,63 | n.b.^{e)} | 102,2 | 8 | 25 |
| 13 | 0,20 | 8,0 | 81000 | 1,85 | -67,0 | 101,2 | 8 | 27 |

| | | | | | | | | |
|---|---|---|---|---|---|---|---|---|
| a) Ausgangspolymer; | | | | | | | | |
| b) Ausgangskonzentration an Pfropfcopolymerrückgrat; | | | | | | | | |
| c) Bestimmt mittels Gelpermeationschromatographie gegen einen Polystyrolstandard; | | | | | | | | |
| d) Glasübergangstemperatur des im Pfropfcopolymerisat vorliegenden Pfropfcopolymerrückgrats, bestimmt mittels DSC mit einer Heizrate von 10K/min; | | | | | | | | |
| e) n.b. = nicht bestimmt; | | | | | | | | |
| f) Glasübergangstemperatur der im Pfropfcopolymeren vorliegenden Pfropfcopolymeräste aus Poly(styrol-co-acrylnitril) (= PSAN), bestimmt mittels DSC mit einer Heizrate von 10K/min; | | | | | | | | |
| g) Anteil an in das Pfropfcopolymere eingebauten Polystyrolseitenästen, bestimmt mittels ¹³C- und ¹H-NMR-Spektroskopie; | | | | | | | | |
| h) Anteil an in das Pfropfcopolymere eingebauten Polystyrolseitenästen, gravimetrisch ermittelt. | | | | | | | | |

D) Herstellung eines Elends aus isotaktischem Polypropylen und Polystyrol
i) Ein Blend aus isotaktischem Polypropylen (4,5 g). Polystyrol (4,5 g) und einem Pfropfcopolymer gemäß Beispiel 10 (1,0 g) in einem Daca Mini-Moulder durch fünfminütiges Mischen bei 180°C hergestellt.
ii) Vergleichsversuch: Wie bei i) beschrieben wurden isotaktisches Polypropylen (5,0 g) und Polystyrol, allerdings ohne Zusatz eines Pfropfcopolymeren vermengt.

Die erhaltenen Proben wurden mittels Transmissionselektronenmikroskopie (TEM) sowie lichtmikroskopisch untersucht. Zwecks Kontrastierung wurden die schichtförmigen Probekörper mit RuO₄ behandelt. Die Polypropylenphase stellte sich als heller, die Polystyrolphase als dunklerer Bereich dar. Das Pfropfcopolymer ließ sich an seiner annähernden Schwarzfärbung erkennen. Die Phasenstarke der gemäß i) erhaltenen Blends lag im Bereich von 2,5 bis 3,5 µm, die der gemäß ii) erhaltenen Blends im Bereich von 20 bis 40 µm. In dem Blend nach i) lag Polystyrol als kugelförmige Phase in einer Polypropylenmatrix vor, wobei die Polystyrolphase direkt mit dem Pfropfcopolymer umgeben war. Anhand der TEM-Aufnahmen ließ sich ebenfalls die lamellare Struktur des Pfropfcopolymers im Blend erkennen.

## Patentansprüche

1. Verfahren zur Herstellung von Pfropfcopolymeren, **dadurch gekennzeichnet, daß** man in einem ersten Schritt
a) Ethen als Hauptmonomer und als weiteres Comonomer ein mit einer Alkoxyamingruppe substituiertes α-Olefin (I) der allgemeinen Formel 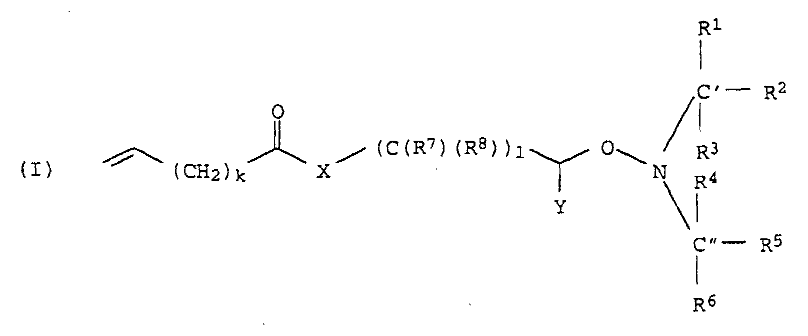 in der die Substituenten und Indizes die folgende Bedeutung haben:
X C(R⁷)(R⁸), O, N(R⁹) oder S mit
R⁷,R⁸,R⁹ Wasserstoff, C₁- bis C₁₀-Alkyl, C₆- bis C₁₆-Aryl oder Alkylaryl mit 1 bis 10 C-Atomen im Alkyl- und 6 bis 14 C-Atomen im Arylteil,
Y C₆- bis C₁₆-Aryl, CN, C(O)OR⁹ oder NO₂,
R¹,R²,R⁵,R⁶ unabhängig voneinander Wasserstoff, C₁-bis C₁₀-Alkyl, C₆- bis C₁₆-Aryl, Alkylaryl mit 1 bis 10 C-Atomen im Alkyl- und 6 bis 14 C-Atomen im Arylteil, CN oder C(O)OR⁹,
R³ und R⁴ C₁-bis C₁₀-Alkyl, C₆- bis C₁₆-Aryl oder Alkylaryl mit 1 bis 10 C-Atomen im Alkyl- und 6 bis 14 C-Atomen im Arylteil oder R³ und R⁴ bilden gemeinsam mit -C'-N-C''- einen fünf- oder sechsgliedrigen Stickstoffheterocyclus,
k ganze Zahlen von 0 bis 20,
l für X = C(R⁷)(R⁸): ganze Zahlen von 0 bis 20 und für X = O, N(R⁹) oder S: ganze Zahlen von 1 bis 20,
in Gegenwart einer Übergangsmetallverbindung der allgemeinen Formel (II) 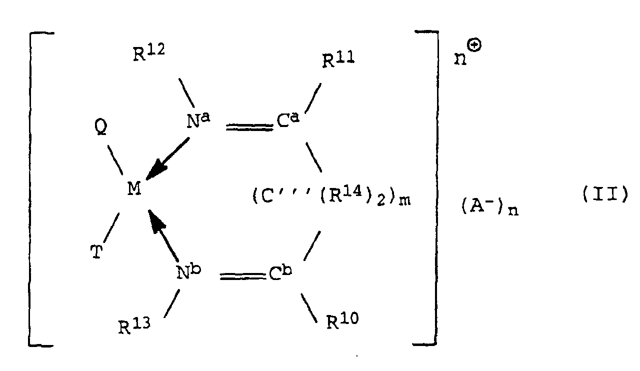 in der die Substituenten und Indizes die folgende Bedeutung haben:
R¹⁰, R¹¹ Wasserstoff, C₁- bis C₁₀-Alkyl, C₃- bis C₁₀-Cyclo-alkyl, C₆- bis C₁₆-Aryl, Alkylaryl mit 1 bis 10 C-Atomen im Alkyl- und 6 bis 14 C-Atomen im Arylteil oder Si(R¹⁵)₃, oder R¹⁰ und R¹¹ bilden gemeinsam mit C^{a}, C^{b} und gegebenenfalls C''' einen fünf-, sechs- oder siebengliedrigen aliphatischen oder aromatischen, substituierten oder unsubstituierten Carbo- oder Heterocyclus,
R¹² R¹³ C₆- bis C₁₆-Aryl,
R₁₄ Wasserstoff, C₁- bis C₁₀-Alkyl, C₆- bis C₁₆-Aryl oder Alkylaryl mit 1 bis 10 C-Atomen im Alkyl- und 6 bis 14 C-Atomen im Arylteil,
R¹⁵ C₁- bis C₁₀-Alkyl, C₆- bis C₁₆-Aryl oder Alkylaryl mit 1 bis 10 C-Atomen im Alkyl- und 6 bis 14 C-Atomen im Arylteil,
m 0 oder 1, bevorzugt 0,
M ein Metall der Gruppe VIII B des Periodensystems der Elemente,
T, Q neutrale oder monoanionische Liganden,
A ein nicht oder schlecht koordinierendes Anion und
n 0, 1, 2 oder 3,
koordinativ zu einem elastomeren Pfropfcopolymerrückgrat copolymerisiert, in einem zweiten Schritt
b) unter kontrolliert radikalischen Polymerisationsbedingungen das nach a) erhaltene Copolymer in Gegenwart von Monomeren, ausgewählt aus der Gruppe bestehend aus vinylaromatischen Verbindungen, vinylheteroaromatischen oder vinylheteroalicyclischen Verbindungen, Alkylestern und -amiden der (Meth)acrylsäure, Acrylnitril, Methacrylnitril, Maleimid oder Vinylferrocen sowie gegebenenfalls zusätzlich in Gegenwart von konjugierten organischen Dienen unter Ausbildung von kovalent angeknüpften Pfropfästen reagieren läßt, und
c) das nach b) erhaltene Pfropfcopolymere isoliert.

2. Verfahren nach Anspruch 1, **dadurch gekennzeichnet, daß** man in Schritt a) als weiteres Comonomer ein mit einer polaren Gruppe funktionalisiertes α-Olefin (III) der allgemeinen Formel
CH₂=C(R¹⁶)(R¹⁷) (III),
einsetzt, in der die Substituenten und Indizes die folgende Bedeutung haben:
R¹⁶ Wasserstoff, CN, CF₃, C₁- bis C₁₀-Alkyl, C₆- bis C₁₆-Aryl oder Alkylaryl mit 1 bis 10 C-Atomen im Alkyl- und 6 bis 14 C-Atomen im Arylteil, Pyrrolidonyl, Si(R²⁰)₃, Carbazolyl,
R¹⁷ CN, C(O)R¹⁸, C(O)OR¹⁸, C(O)N(R¹⁸)(R¹⁹), O-C₁- bis -O-C₁₀-Alkyl, O-C₆- bis -O- C₁₆-Aryl mit
R¹⁸, R¹⁹ Wasserstoff, C₁- bis C₁₀-Alkyl, C₂- bis C₁₀-Alkenyl, C₆-bis C₁₆-Aryl oder Alkylaryl mit 1 bis 10 C-Atomen im Alkyl- und 6 bis 14 C-Atomen im Arylteil, eine Epoxygruppe enthaltende C₂- bis C₁₀-Alkylgruppe, eine mit einer Epoxygruppe substituierte C₆- bis C₁₆-Arylgruppe oder Si(R²⁰)₃ und
R²⁰ C₁- bis C₁₀-Alkyl, C6- bis C₁₆-Aryl oder Alkylaryl mit 1 bis 10 C-Atomen im Alkyl- und 6 bis 14 C-Atomen im Arylteil.

3. Verfahren nach Anspruch 2, **dadurch gekennzeichnet, daß** man als Comonomer (III) (Meth)acrylsäure, die Ester oder Amide der (Meth)acrylsäure, Acrylnitril, Methacrylnitril oder deren Mischungen verwendet.

4. Verfahren nach den Ansprüchen 1 bis 3, **dadurch gekennzeichnet, daß** man in Schritt a) als weiteres Comonomer ein unpolares Olefin (IV) verwendet, das nicht Ethen ist.

5. Verfahren nach den Ansprüchen 1 bis 4, **dadurch gekennzeichnet, daß** man in Schritt a) Radikalinhibitoren zusetzt.

6. Verfahren nach den Ansprüchen 1 bis 5, **dadurch gekennzeichnet, daß** man für die Pfropfreaktion in Schritt b) vinylaromatische oder vinylheteroaromatische Verbindungen oder Acrylnitril oder deren Mischungen verwendet.

7. Verfahren nach den Ansprüchen 1 bis 6, **dadurch gekennzeichnet, daß** man die radikalisch polymerisierbaren Verbindungen in Schritt b) sequentiell zum Polymerisationsgemisch gibt.

8. Verfahren nach den Ansprüchen 1 bis 7, **dadurch gekennzeichnet, daß** man nach Schritt b) und vor der Isolierung des Pfropfcopolymeren die die Pfropfcopolymerseitenäste terminierenden Alkoxyamingruppen unter reduktiven Reaktionsbedingungen entfernt.

9. Pfropfcopolymere, erhältlich gemäß den Ansprüchen 1 bis 8.

10. Verwendung der Pfropfcopolymere gemäß Anspruch 8 als zähmodifizerte Thermoplasten oder als Phasenvermittler in Polymerblends.

## Claims

1. A process for preparing graft copolymers, which comprises, in a first step,
a) a coordinative copolymerization of ethene as main monomer and, as further comonomer, an α-olefin (I) substituted with an alkoxyamine group and having the formula 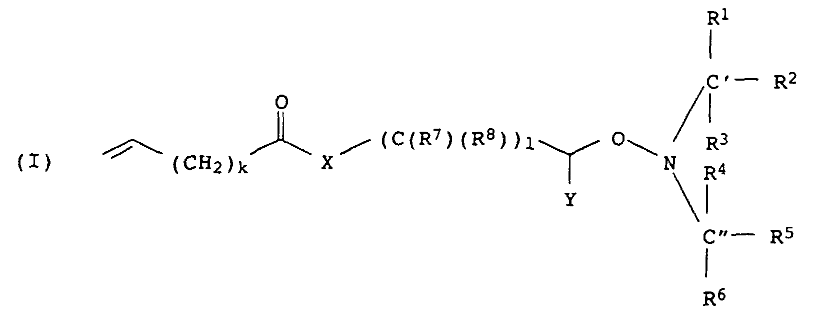 where:
X is C(R⁷)(R⁸), O, N(R⁹) or S, where
R⁷, R⁸ and R⁹ are hydrogen, C₁-C₁₀-alkyl, C₆-C₁₆-aryl or alkylaryl having from 1 to 10 carbon atoms in the alkyl moiety and from 6 to 14 carbon atoms in the aryl moiety,
Y is C₆-C₁₆-aryl, CN, C(O)OR⁹ or NO₂,
R¹, R², R⁵ and R⁶, independently of one another, are hydrogen, C₁-C₁₀-alkyl, C₆-C₁₆-aryl, alkylaryl having from 1 to 10 carbon atoms in the alkyl moiety and from 6 to 14 carbon atoms in the aryl moiety, CN or C(O)OR⁹,
R³ and R⁴ are C₁-C₁₀-alkyl, C₆-C₁₆-aryl or alkylaryl having from 1 to 10 carbon atoms in the alkyl moiety and from 6 to 14 carbon atoms in the aryl moiety, or where R³ and R⁴ combined with -C'-N-C'' form a five- or six-membered nitrogen heterocycle,
k is an integer from 0 to 20,
l is an integer from 0 to 20 if X = C(R⁷)(R⁸), or an integer from 1 to 20 if X = O, N(R⁹) or S,
in the presence of a transition metal compound of the formula (II) 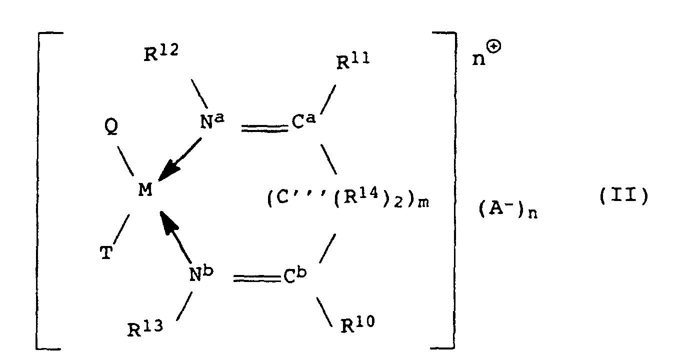 where:
R¹⁰ and R¹¹ are hydrogen, C₁-C₁₀-alkyl, C₃-C₁₀-cycloalkyl, C₆-C₁₆-aryl, alkylaryl having from 1 to 10 carbon atoms in the alkyl moiety and from 6 to 14 carbon atoms in the aryl moiety, or Si(R¹⁵)₃, or where R¹⁰ and R¹¹ together with C^{a}, C^{b} and, if desired, C''' form a five-, six- or seven-membered aliphatic or aromatic, substituted or unsubstituted carbo- or heterocycle,
R¹² and R¹³ are C₆-C₁₆-aryl,
R¹⁴ is hydrogen, C₁-C₁₀-alkyl, C₆-C₁₆-aryl or alkylaryl having from 1 to 10 carbon atoms in the alkyl moiety and from 6 to 14 carbon atoms in the aryl moiety,
R¹⁵ is C₁-C₁₀-alkyl, C₆-C₁₆-aryl or alkylaryl having from 1 to 10 carbon atoms in the alkyl moiety and from 6 to 14 carbon atoms in the aryl moiety,
m is 0 or 1, preferably 0,
M is a metal of group VIII B of the periodic table,
T and Q are neutral or monoanionic ligands,
A is a noncoordinating or poorly coordinating anion, and
n is 0, 1, 2 or 3,
to give an elastomeric graft copolymer backbone, and, in a second step,
b) allowing the copolymer obtained after a) to react under controlled free-radical polymerization conditions in the presence of monomers selected from the group consisting of vinylaromatic compounds, vinylheteroaromatic or vinylheteroalicyclic compounds, the alkyl esters and alkylamides of (meth)acrylic acid, acrylonitrile, methacrylonitrile, maleimide or vinylferrocene, and also, if desired, additionally in the presence of conjugated organic dienes, forming covalently linked grafts, and
c) isolating the graft copolymer obtained after b).

2. A process as claimed in claim 1, wherein a further comonomer used in step a) is an α-olefin (III) functionalized with a polar group and having the formula
CH₂=C(R¹⁶)(R¹⁷) (III),
where:
R¹⁶ is hydrogen, CN, CF₃, C₁-C₁₀-alkyl, C₆-C₁₆-aryl or alkylaryl having from 1 to 10 carbon atoms in the alkyl moiety and from 6 to 14 carbon atoms in the aryl moiety, pyrrolidonyl, Si(R²⁰)₃ or carbazolyl,
R¹⁷ is CN, C(O)R¹⁸, C(O)OR¹⁸, C(O)N(R¹⁸)(R¹⁹), O-C₁- to O-C₁₀-alkyl or O-C₆- to O-C₁₆-aryl, where
R¹⁸ and R¹⁹ are hydrogen, C₁-C₁₀-alkyl, C₂-C₁₀-alkenyl, C₆-C₁₆-aryl or alkylaryl having from 1 to 10 carbon atoms in the alkyl moiety and from 6 to 14 carbon atoms in the aryl moiety, C₂-C₁₀-alkyl containing an epoxy group or C₆-C₁₆-aryl substituted with an epoxy group, or Si(R²⁰)₃, and
R²⁰ is C₁-C₁₀-alkyl, C₆-C₁₆-aryl or alkylaryl having from 1 to 10 carbon atoms in the alkyl moiety and from 6 to 14 carbon atoms in the aryl moiety.

3. A process as claimed in claim 2, wherein the comonomer (III) used is (meth)acrylic acid, the esters or amides of (meth)acrylic acid, acrylonitrile, methacrylonitrile or mixtures of these.

4. A process as claimed in any of claims 1 to 3, wherein the further comonomer used in step a) is a nonpolar olefin (IV) other than ethene.

5. A process as claimed in any of claims 1 to 4, wherein free-radical inhibitors are added in step a).

6. A process as claimed in any of claims 1 to 5, wherein vinylaromatic or vinylheteroaromatic compounds or acrylonitrile or mixtures of these are used for the grafting reaction in step b).

7. A process as claimed in any of claims 1 to 6, wherein the compounds which can be polymerized by a free-radical route are added in sequence to the polymerization mixture in step b).

8. A process as claimed in any of claims 1 to 7, wherein, after step b) and prior to isolating the graft copolymer, the alkoxyamine groups terminating the side chains of the graft copolymer are removed under reductive reaction conditions

9. A graft copolymer obtainable as claimed in any of claims 1 to 8.

10. The use of the graft copolymers as claimed in claim 8 as impact-modified thermoplastics or as compatibilizers in polymer blends.

## Revendications

1. Procédé de préparation de copolymères greffés, **caractérisé en ce que**, dans une première étape, on copolymérise
a) de l'éthène en tant que monomère principal et, comme autre comonomère, une α-oléfine (I) substituée par un groupe alcoxyamine, de la formule générale 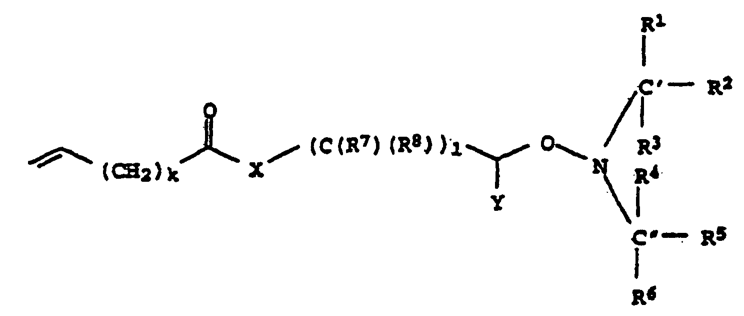 dans laquelle les substituants et indices ont les significations suivantes:
X C(R⁷) (R⁸), O, N(R⁹) ou S avec
R⁷, R⁸, R⁹ hydrogène, alkyle en C₁ à C₁₀, aryle en C₆ à C₁₆ ou alkylaryle avec de 1 à 10 atomes de C dans la partie alkyle et de 6 à 14 atomes de C dans la partie aryle,
Y aryle en C₆ à C₁₆, CN, C(O)OR⁹ ou NO₂,
R¹, R², R⁵, R⁶ indépendamment les uns des autres, représentent de l'hydrogène ou un radical alkyle en C₁ à C₁₀, aryle en C₆ à C₁₆, alkylaryle avec de 1 à 10 atomes de C dans la partie alkyle et de 6 à 14 atomes de C dans la partie aryle, CN ou C(O)OR⁹,
R³ et R⁴ alkyle en C₁ à C₁₀, aryle en C₆ à C₁₆ ou alkylaryle avec de 1 à 10 atomes de C dans la partie alkyle et de 6 à 14 atomes de C dans la partie aryle, ou bien R³ et R⁴ forment ensemble avec -C'-N-C''- un hétérocycle azoté pentagonal ou hexagonal,
k est un nombre entier de 0 à 20,
l pour X = C(R⁷)(R⁸): nombres entiers de 0 à 20 et
pour X = O, N(R⁹) ou S: nombres entiers de 1 à 20,
en présence d'un composé de métal de transition de la formule générale (II) 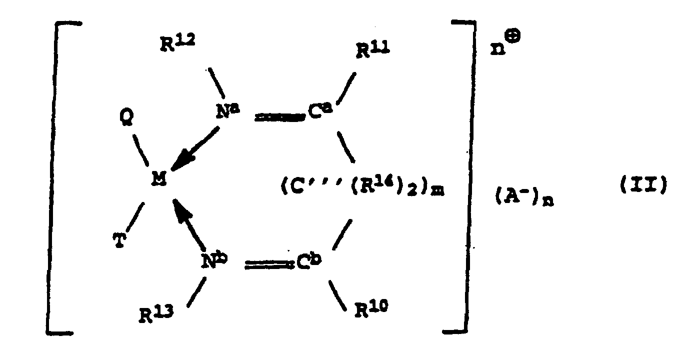 dans laquelle les substituants et indices ont les significations suivantes:
R¹⁰, R¹¹ hydrogène, alkyle en C₁ à C₁₀, cycloalkyle en C₃ à C₁₀, aryle en C₆ à C₁₆, alkylaryle avec de 1 à 10 atomes de C dans la partie alkyle et de 6 à 14 atomes de C dans la partie aryle, ou Si(R¹⁵)₃, ou bien R¹⁰ et R¹¹ forment ensemble avec C^{a}, C^{b} et éventuellement C''' un carbo- ou un hétérocycle pentagonal, hexagonal ou heptagonal aliphatique ou aromatique, substitué ou non substitué,
R¹², R¹³ aryle en C₆ à C₁₆,
R¹⁴ hydrogène, alkyle en C₁ à C₁₀, aryle en C₆ à C₁₆ ou alkylaryle avec de 1 à 10 atomes de C dans la partie alkyle et de 6 à 14 atomes de C dans la partie aryle,
R¹⁵ alkyle en C₁ à C₁₀, aryle en C₆ à C₁₆ ou alkylaryle avec de 1 à 10 atomes de C dans la partie alkyle et de 6 à 14 atomes de C dans la pane aryle,
m 0 ou 1, de préférence 0,
M un métal du groupe VIII B du système périodique des éléments,
T, Q ligands neutres ou monoanioniques,
A un anion non coordinant ou peu coordinant et
n 0, 1, 2 ou 3,
de manière coordinative afin d'obtenir un squelette de copolymère greffé, dans une deuxième étape
b) on fait réagir, dans des conditions de polymérisation radicalaire contrôlées, le copolymère obtenu en a), en présence de monomères choisis dans le groupe formé par des composés vinylaromatiques, des composés vinyliques hétéroaromatiques ou vinyliques hétéroalicycliques, des esters et amides alkyliques de l'acide (méth)acrylique, de l'acrylonitrile, du méthacrylonitrile, de l'imide maléique ou du vinytferrocène, ainsi qu'éventuellement en présence de diènes organiques conjugués avec formation de noeuds de greffage à liaison covalente, et
c) on isole le copolymère greffé obtenu en b).

2. Procédé selon la revendication 1, **caractérisé en ce que**, dans l'étape s), on met en oeuvre comme autre comonomère une α -oléfine (III) fonctionnalisée par un groupe polaire, de la formule générale
CH₂ = C (R¹⁶) (R¹⁷) (III),
dans laquelle les substituants et indices ont les significations suivantes:
R¹⁶ hydrogène, CN, CF₃, alkyle en C₁ à C₁₀, aryle en C₆ à C₁₆ ou alkylaryle avec de 1 à 10 atomes de C dans la partie alkyle et de 6 à 14 atomes de C dans la partie aryle, pyrrolidonyle, Si(R²⁰)₃, carbazolyle,
R¹⁷ CN, C(O)R¹⁸, C(O)OR¹⁸, C(O)N(R¹⁸)(R¹⁹), O-C₁- à O-C₁₀-alkyle, O-C₆- à O-C₁₆-aryle, avec
R¹⁸, R¹⁹ hydrogène, alkyle en C₁ à C₁₀, alcényle en C₂ à C₁₀, aryle en C₆ à C₁₆ ou alkylaryle avec de 1 à 10 atomes de C dans la partie alkyle et de 6 à 14 atomes de C dans la partie aryle, un radical alkyle en C₂ à C₁₀ contenant un groupe époxy, un radical aryle en C₆ à C₁₆ substitué par un groupe époxy, ou Si(OR²⁰=₃, et
R²⁰ alkyle en C₁ à C₁₀, aryle en C₆ à C₁₆ ou alkylaryle avec de 1 à 10 atomes de C dans la partie alkyle et de 6 à 14 atomes de C dans la partie aryle.

3. Procédé selon la revendication 2, **caractérisé en ce que** l'on utilise comme comonomère (III) de l'acide (méth)acrylique, les esters ou amides de l'acide (méth)acrylique, de l'acrylonitrile, du méthacrylonitrile ou leurs mélanges.

4. Procédé selon les revendications 1 à 3, **caractérisé en ce que**, dans l'étape a), on utilise comme autre comonomère une oléfine non polaire (IV) différente de l'éthène.

5. Procédé selon les revendications 1 à 4, **caractérisé en ce que** l'on ajoute à l'étape a) des inhibiteurs radicalaires.

6. Procédé selon les revendications 1 à 5, **caractérisé en ce que**, pour la réaction de greffage à l'étape b), on utilise des composés vinylaromatiques ou vinyliques hétéroaromatiques, ou de l'acrylonitrile, ou leurs mélanges.

7. Procédé selon les revendications 1 à 6, **caractérisé en ce que** l'on ajoute les composés polymérisables par voie radicalaire au mélange de polymérisation de manière séquentielle dans l'étape b).

8. Procédé selon les revendications 1 à 7, **caractérisé en ce qu'**après l'étape b) et avant d'isoler le copolymère greffé, on élimine dans des conditions réductrices les groupes alcoxyamine terminant les ramifications latérales du copolymère greffé.

9. Copolymères greffés que l'on peut obtenir selon les revendications 1 à 8.

10. Utilisation des copolymères greffés selon la revendication 8 comme thermoplastiques modificateurs de ténacité ou comme médiateurs de phases dans des mélanges de polymères.
